(19) Europäisches Patentamt European Patent Office Office européen des brevets

(11) **EP 2 075 760 A1**

(12) **EUROPEAN PATENT APPLICATION**
published in accordance with Art. 153(4) EPC

(43) Date of publication:
**01.07.2009 Bulletin 2009/27**

(51) Int Cl.:
***G06T 7/00*** (2006.01)

(21) Application number: **07830245.2**

(22) Date of filing: **16.10.2007**

(86) International application number:
**PCT/JP2007/070511**

(87) International publication number:
**WO 2008/047935 (24.04.2008 Gazette 2008/17)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **19.10.2006 JP 2006285353**

(71) Applicant: **Sony Corporation**
**Tokyo 108-0075 (JP)**

(72) Inventor: **ABE, Hiroshi**
**Minato-ku**
**Tokyo 108-0075 (JP)**

(74) Representative: **Nicholls, Michael John**
**J.A. Kemp & Co.**
**14 South Square**
**Gray's Inn**
**London**
**WC1R 5JJ (GB)**

(54) **PATTERN IDENTIFYING METHOD, REGISTRATION DEVICE, COLLATING DEVICE AND PROGRAM**

(57)    A pattern identification method and other things to improve the accuracy of authentication are proposed. For each of living body's patterns obtained from a plurality of living body's samples, two or more form values representing the shape of the pattern are calculated; the center of the distribution of the two or more form values and a value representing the degree of the spread from the center are calculated; a distance between the two or more form values of a pattern obtained from those to be registered or to be compared with registered data and the center of the distribution of the two or more form values is calculated with the use of the value representing the degree of the spread from the center; the pattern is disposed of if the distance is greater than a predetermined threshold.

FIG. 22

**Description**

Technical Field

The present invention relates to a pattern identification method, registration device, verification device and program, and is preferably applied to biometrics authentication.

Background Art

A blood vessel has been among the subjects of biometrics authentication. A blood vessel image of a registrant is usually registered in an authentication device as registration data. The authentication device makes a determination as to whether a person is the registrant according to how much verification data, which is input as data to be verified, resembles the registration data.

There are various proposals for such authentication devices to prevent identity theft. For example, one method focuses on the fact that the coordinates and other factors of the input verification data cannot be exactly the same as those of the previously input verification data: when the device finds that these verification data are all the same, it does not authenticate even if they are the same as the registration data (see Patent Document 1, for example). This identity theft prevention method works well when the registrants' blood vessel image data are stolen.

By the way, there is a report that if a picture of a root crop, such as radish, is taken instead of that of the finger, the authentication device may obtain a pattern (referred to as pseudo blood vessel pattern, hereinafter) that resembles a pattern of blood vessels (referred to as blood vessel pattern, hereinafter) because tubes inside the radish such as vessels, sieve tubes, and fascicles, look like the blood vessels of a living body: the use of radish or the like allows identity theft.

Patent Document 1: Japanese Patent Publication No. 2002-259345
Non Patent Document 1: Tsutomu Matsumoto, "Biometrics Authentication for Financial Transaction," [online], April 15, 2005, the 9th study group of the Financial Services Agency for the issues on forged cash cards, (searched on August 21, 2006), Internet <URL: http://www.fsa.go.jp/singi/singi_fccsg/gaiyou/f-20050415-singi_fccsg/02.pdf>)

In this case, the coordinates and other factors of the pseudo blood vessel pattern can not be exactly the same: as those of the registrant's blood vessel pattern. So even if the above identity theft prevention method is applied, anyone can be identified as the registrant, allowing identity theft and lowering the accuracy of authentication.

Disclosure of the Invention

The present invention has been made in view of the above points and is intended to provide a pattern identification method, registration device, verification device and program that can improve the accuracy of authentication.

To solve the above problem, a pattern identification method of the present invention includes the steps of: calculating, for each of living body's patterns obtained from a plurality of living body's samples, two or more form values representing the shape of the pattern; calculating the center of the distribution of the two or more form values and a value representing the degree of the spread from the center; calculating a distance between the two or more form values of a pattern obtained from those to be registered or to be compared with registered data and the center of the distribution of the two or more form values using the value representing the degree of the spread from the center; and disposing of the pattern if the distance is greater than a predetermined threshold.

Accordingly, this pattern identification method can recognize where the pattern obtained from those to be either registered or compared with the registered data exists in the distribution having a plurality of dimensions (pattern form values) regarding each living body's pattern, and whether it exists within a range extending from the center of the distribution to a boundary (threshold): existing inside the range means that it is a living body's pattern.

Accordingly, this pattern identification method can increase the possibility that it eliminates a pseudo pattern resembling the living body's pattern before registering or comparing them, even if the pattern obtained from those to be either registered or compared with the registered data is the pseudo pattern.

Moreover, a registration device of the present invention includes: storage means for storing, for each of living body's patterns obtained from a plurality of living body's samples, the center of the distribution of two or more form values representing the shape of the pattern and a value representing the degree of the spread from the center; calculation means for calculating a distance between the two or more form values of a pattern obtained from those to be registered and the center of the distribution of the two or more form values stored in the storage means using the value; and registration means for disposing of the pattern if the distance is greater than a predetermined threshold while registering the pattern in a storage medium if the distance is within the threshold.

Accordingly, this registration device can recognize where the pattern obtained from those to be registered exists in the distribution having a plurality of dimensions (pattern form values) regarding each living body's pattern, and whether it exists within a range extending from the center of the distribution to a boundary (threshold): existing inside the range means that it is a living body's pattern.

Accordingly, this registration device can increase the possibility that it eliminates a pseudo pattern resembling the living body's pattern before registering them, even if the pattern obtained from those to be registered is the pseudo pattern.

Furthermore, a verification device of the present invention includes: storage means for storing, for each of living body's patterns obtained from a plurality of living body's samples, the center of the distribution of two or more form values representing the shape of the pattern and a value representing the degree of the spread from the center; calculation means for calculating a distance between the two or more form values of a pattern obtained from those to be registered and the center of the distribution of the two or more form values stored in the storage means; and verification means for disposing of the pattern if the distance is greater than a predetermined threshold while comparing the pattern with registered data registered in a storage medium if the distance is within the threshold.

Accordingly, this verification device can recognize where the pattern obtained from those to be compared exists in the distribution having a plurality of dimensions (pattern form values) regarding each living body's pattern, and whether it exists within a range extending from the center of the distribution to a boundary (threshold): existing inside the range means that it is a living body's pattern.

Accordingly, this verification device can increase the possibility that it eliminates a pseudo pattern resembling the living body's pattern before comparing them, even if the pattern obtained from those to be compared is the pseudo pattern.

Furthermore, a program of the present invention causing a computer that stores, for each of living, body's patters obtained from a plurality of living body's samples, the center of the distribution of two or more form values representing the shape of the pattern and a value representing the degree of the spread from the center, executes: a first process of calculating a distance between the two or more form values of a pattern obtained from those to be registered and the center of the distribution of the two or more form values stored in the storage means using the value; and a second process of disposing of the pattern if the distance is greater than a predetermined threshold while registering the pattern in a storage medium if the distance is : within the threshold, or a second process of disposing of the pattern if the distance is greater than a predetermined threshold while comparing the pattern with registered data registered in a storage medium if the distance is within the threshold.

Accordingly, this program can recognize where the pattern obtained from those to be either registered or compared with the registered data exists in the distribution having a plurality of dimensions (pattern form values) regarding each living body's pattern, and whether it exists within a range extending from the center of the distribution to a boundary (threshold): existing inside the range means that it is a living body's pattern.

Accordingly, this program can increase the possibility that it eliminates a pseudo pattern resembling the living body's pattern before registering or comparing them, even if the pattern obtained from those to be either registered or compared with the registered data is the pseudo pattern.

According to the present invention, they can recognize where the pattern obtained from those to be either registered or compared with the registered data exists in the distribution having a plurality of dimensions (pattern form values regarding each living body's pattern, and whether it exists within a range extending from the center of the distribution to a boundary (threshold): existing inside the range means that it is a living body's pattern. Accordingly, they can increase the possibility that it eliminates the pseudo pattern before registering or comparing them by assuming that it is not the living body's pattern. Thus, the registration device, verification device, extraction method and program that are able to improve the accuracy of authentication can be realized.

Brief Description of the Drawings

Fig. 1 is a block diagram illustrating the configuration of a data generation device according to an embodiment of the present invention.
Fig. 2 is a functional block diagram illustrating the image process of a control section.
Fig. 3 is a schematic diagram illustrating images before and after a preprocessing process.
Fig. 4 is a schematic diagram as to a description of an emerging pattern of an end point, a diverging point, and an isolated point.
Fig. 5 is a schematic diagram illustrating a tracking of a blood vessel line between a diverging point and a diverging or end point.
Fig. 6 is a schematic diagram as to a description of a tracking of a blood vessel pixel.

Fig. 7 is a schematic diagram illustrating an emerging pattern of a point on a line and an inflection point.

Fig. 8 is a schematic diagram as to a description of the detection of an inflection point.

Fig. 9 is a schematic diagram as to a description of the determination of an overlap ratio of a segment's pixel with respect to an original blood vessel pixel.

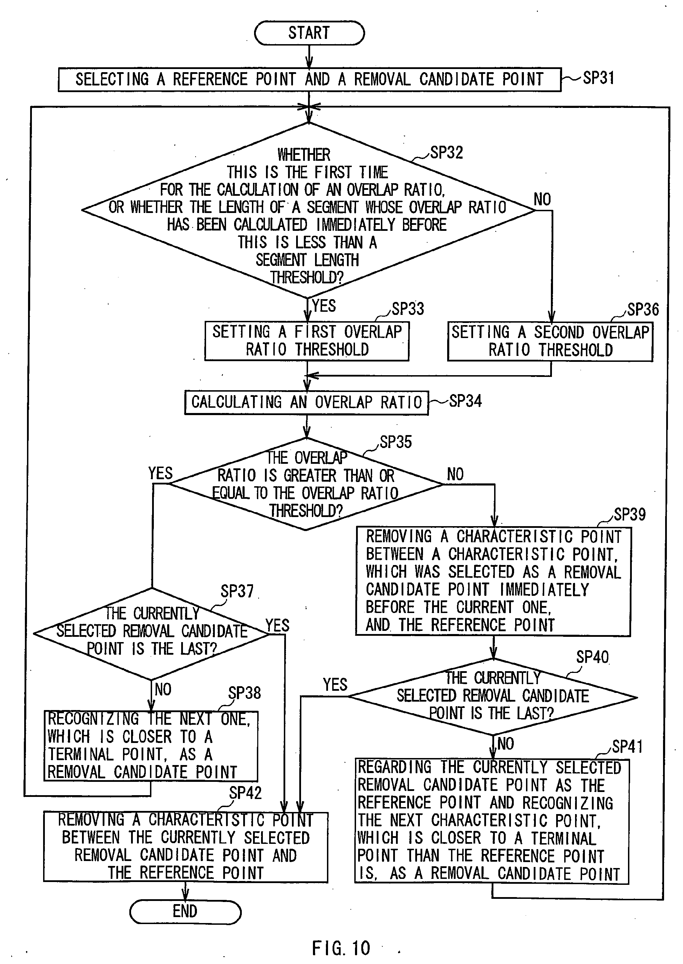

Fig. 10 is a flowchart illustrating the procedure of a removal process.

Fig. 11 is a schematic diagram illustrating an inflection point before and after removal.

Fig. 12 is a schematic diagram illustrating the connection of segment blood vessel lines (three diverging points).

Fig. 13 is a schematic diagram illustrating the connection of segment blood vessel lines (four diverging points).

Fig. 14 is a schematic diagram illustrating characteristic points obtained from a characteristic point extraction process.

Fig. 15 is a schematic diagram illustrating a blood vessel pattern and a pseudo blood vessel pattern.

Fig. 16 is a schematic diagram as to the calculation of an angle of a segment with respect to a horizontal axis passing through the end point of the segment.

Fig. 17 is a schematic diagram illustrating an angle distribution of a blood vessel pattern.

Fig. 18 is a schematic diagram illustrating an angle distribution of a pseudo blood vessel pattern.

Fig. 19 is a schematic diagram illustrating the length of a segment resembling a straight line.

Fig. 20 is a schematic diagram illustrating the distribution of distinguishing indicator.

Fig. 21 is a schematic diagram illustrating the distribution of distinguishing indicators on a σ-C plane.

Fig. 22 is a flowchart illustrating the procedure of a data generation process.

Fig. 23 is a block diagram illustrating the configuration of an authentication device according to an embodiment of the present invention.

Fig. 24 is a schematic diagram illustrating the procedure of a distinguishing process (1).

Fig. 25 is a schematic diagram illustrating the procedure of a distinguishing process (2).

Best Mode for Carrying Out the Invention

An embodiment of the present invention will be described in detail with reference to the accompanying drawings.

(1) Overall configuration of an authentication system according to an embodiment of the present invention.

An authentication system of the present embodiment includes a data generation device and an authentication device. The data generation device generates data (referred to as blood vessel pattern range data, hereinafter) representing a range: a determination is to be made about blood vessel patterns based on this range. The data generation device records the data in an internal memory of the authentication device.

The authentication device is equipped with a function that makes a determination as to whether a pattern of an image data obtained as a result of taking a picture of an object is a pseudo blood vessel pattern according to the blood vessel pattern range data.

(2) Configuration of the data generation device

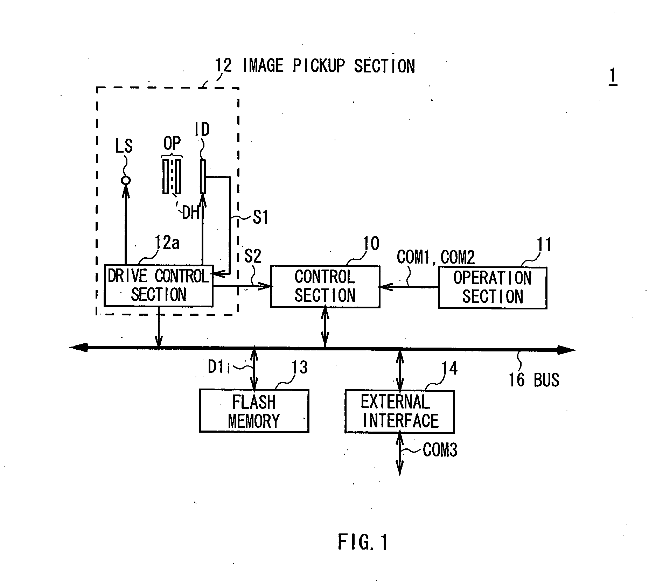

Fig. 1 shows the configuration of the data generation device. The data generation device 1 includes a control section 10 to which an operation section 11, an image pickup section 12, a flash memory 13, and a interface (referred to as external interface, hereinafter) 14 that exchanges data with an external section are connected via a bus 15.

The control section 10 is a microcomputer including CPU (Central Processing Unit) that takes overall control of the data generation device 1, ROM (Read Only Memory) that stores various programs and setting information, and RAM (Random Access Memory) that serves as a work memory for CPU.

When a user operates the operation section 11, an image pickup command COM1 or a command COM2 that orders the generation of the blood vessel pattern range data is given to the control section 10 from the operation section 11. Based on the execution commands COM1 and COM2, the control section 10 makes a determination as to which mode it should start. Using a.. program corresponding to the determination, the control section 10 appropriately controls the image pickup section 12, the flash memory 13, and the external interface 14 to run in image pickup mode or data generation mode. (2=1) Image pickup mode

More specifically, if the determination is that it should start the image pickup mode, the control section 10 enters the image pickup mode, which is an operation mode, to control the image pickup section 12.

In this case, a drive control section 12a of the image pickup section 12 drives and controls one or more near infrared beam sources LS that emit a near infrared beam toward a predetermined position of the data generation device 1, and an image pickup element ID that is for example CCD (Charge Coupled Device).

After the emission of the near infrared beam to an object placed at the predetermined position, the image pickup element ID receives the near infrared beam from the object via an optical system OP and an aperture diaphragm DH, converts it into electric signals and transmits them to the drive control section 12a as image signals S1.

If the object is a finger of a living body, the near infrared beam emitted from the near infrared beam source LS gets into the finger, and, after being reflected and scattered inside the finger, emerges from the finger as a blood vessel representation beam to enter the image pickup element ID: the blood vessel representation beam represents the finger's blood vessels. The blood vessel representation beam is then transmitted to the drive control section 12a as the image signals S1.

The drive control section 12a adjusts the position of an optical lens of the optical system OP according to the pixel values of the image signals S1, so that the object is in focus. The drive control section 12a also adjusts the aperture of the aperture diaphragm DH so that the amount of light entering the image pickup element ID becomes appropriate. After the adjustment, an image signal S2 output from the image pickup element ID is supplied to the control section 10.

The control section 10 performs a predetermined image process for the image signals S2 to extract a characteristic of an object pattern from the image, and stores the extracted image in the flash memory 13 as image data D1.

In this manner, the control section 10 can perform the image pickup mode.

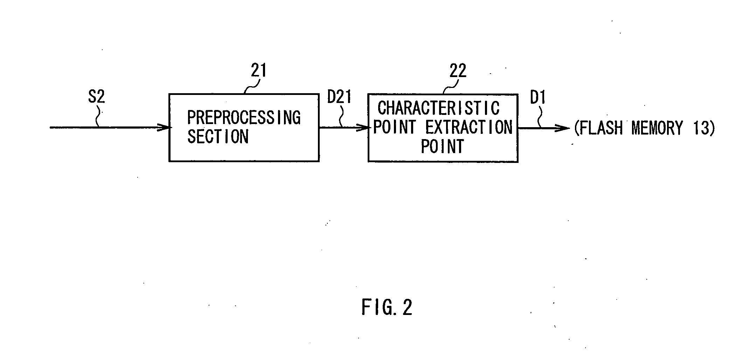

The following describes how the image process is performed. From a functional point of view, as shown in Fig. 2, the image process can be divided into a preprocessing section 21 and a characteristic point extraction section 22. The following provides a detailed description of the preprocessing section 21 and the characteristic point extraction section 22. By the way, for ease of explanation, the image signals S2 supplied from the image pickup section 12 are those obtained as a result of taking a picture of a living body's finger.

(2-1-A) Preprocessing

In order to extract a blood vessel pattern, the preprocessing section 21 sequentially performs an A/D (Analog/ Digital) conversion process, a predetermined outline extraction process such as Sobel filtering, a predetermined smoothing process such as Gaussian filtering, a binarization process, and a thinning process for the image signals S2 supplied from the image pickup section 12.

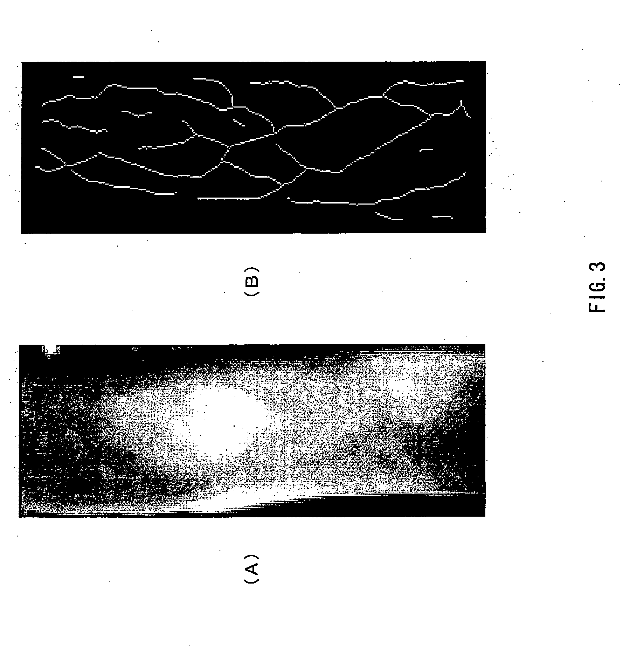

For example, assume that an image (the image signals S2) shown in Fig. 3(A) is input into the preprocessing section 21: thanks to the preprocessing by the preprocessing section 21, the image is converted into an image shown in Fig. 3(B), with the blood vessel pattern of the image emphasized.

The reprocessing section 21 outputs data (referred to as image data, hereinafter) D21 whose image shows the extracted blood vessel pattern to the characteristic point extraction section 22.

In the present embodiment, the blood vessel lines (the blood vessel pattern) included in the image of the image data 21 are converted by the binarization process into white pixels; their widths (or thickness) are represented as "1" as a result of the thinning process. If the width of the blood vessel line is "1," then the width of the line is one pixel.

(2-1-B) Characteristic point extraction process

The characteristic point extraction section 22 detects end points, diverging points, and inflection points from the white pixels (referred to as blood vessel pixels, hereinafter) that constitute a blood vessel patter of the input image, and appropriately removes the inflection points with reference to the end points and the diverging points.

(B-1) Detection of the end and diverging points

The characteristic point extraction section 22 detects the end and diverging points from the blood vessel lines in the first stage of the process.

More specifically, from among the pixels constituting the input image (the image data D21), the characteristic point extraction section 22 recognizes the blood vessel pixels as attention pixels in a predetermined order, and examines the eight pixels around the attention pixel to count the number of the blood vessel pixels.

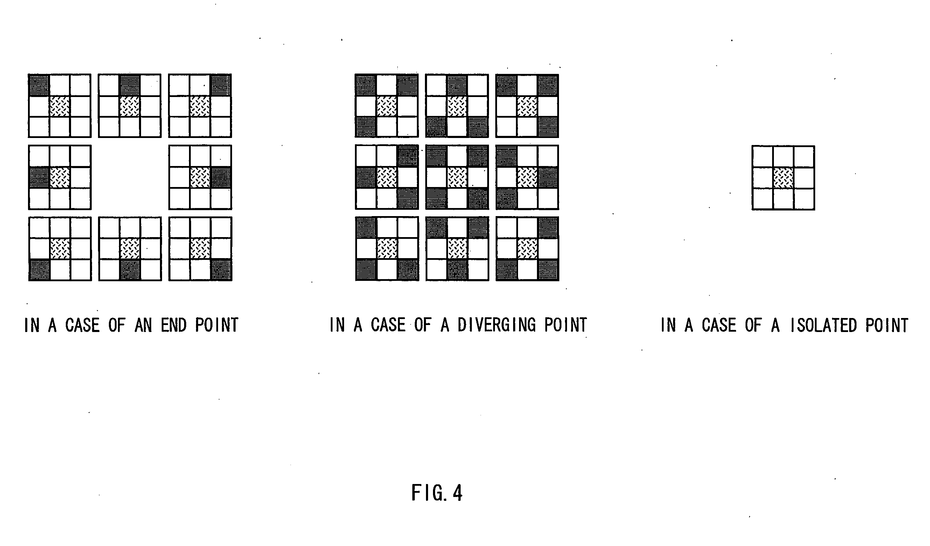

Here, Fig. 4 shows a pattern of how the end, diverging and isolated points of the blood vessel lines appear. In Fig. 4, a hatched area represents the attention pixel; a blacks area represents the blood vessel pixel (the white pixel) for ease of explanation. It is obvious from Fig. 4 that if the width of the blood vessel line is represented as one pixel, the correlation between the attention pixel and the number of the blood vessel pixels is self determined; as for the diverging pattern, it must have three or four diverging points.

Accordingly, if there is one blood vessel pixel around the attention pixel, the characteristic point extraction section 22 detects this attention pixel as the end point. On the other hand, if there are three or four blood vessel pixels around the attention pixel, the characteristic point extraction section 22 detects this attention pixel as the diverging point. By contrast, if there is no blood vessel pixel around the attention pixel, the characteristic point extraction section 22 detects the attention pixel as the isolated point.

Then, the characteristic point extraction section 22 removes the isolated points, which do not constitute the blood vessel line, from the detected end, diverging and isolated points.

In this manner, the characteristic point extraction section 22 detects the end and diverging points from the blood vessel lines in the first stage of the process.

(B-2) Detection of the inflection point

Then, based on the end and diverging points, the characteristic point extraction section 22 detects the inflection points in the second stage of the process.

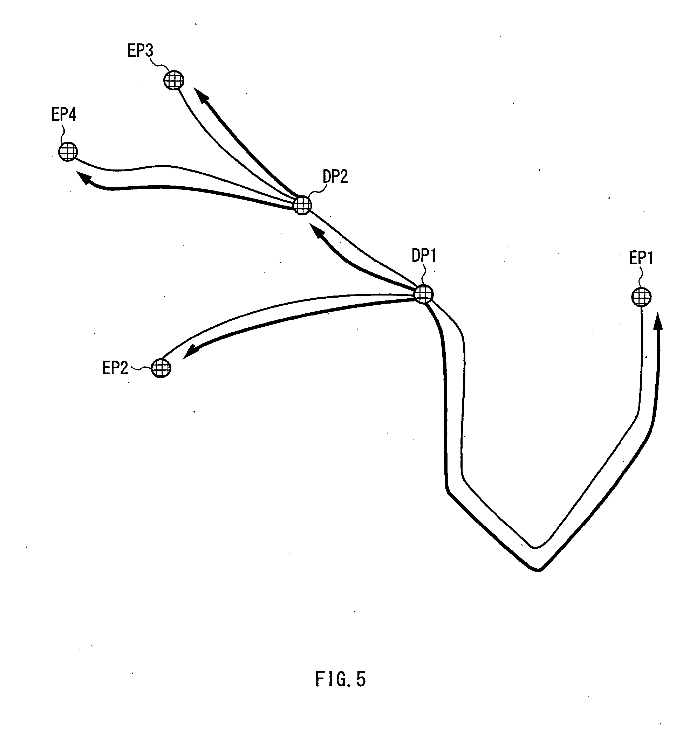

More specifically, for example, as shown in Fig. 5, the characteristic point extraction section 22 recognizes the diverging point DP1 as a starting point, and other characteristic points (the ending points EP1 and EP2, and the diverging point DP2), which appear after the starting point (or the diverging point DP1), as a terminal point; it then tracks a segment of the blood vessel line (referred to as segment blood vessel line, hereinafter) extending from the starting point to the terminal point. Similarly, the characteristic point extraction section 22 recognizes the diverging point DP2 as a starting point, and other characteristic points (the ending points EP3 and EP4), which appear after the starting point (or the diverging point DP2), as a terminal point; it then tracks the segment blood vessel line.

In this example of Fig. 5, the starting points are the diverging points DP1 and DP2, but the end points can also be the starting points. Incidentally, it is obvious from Fig. 5 that the end points can only be either the starting or terminal points, while there is another diverging point (or points) before or after (or at both sides of) the diverging point regardless of whether it is the starting or terminal point.

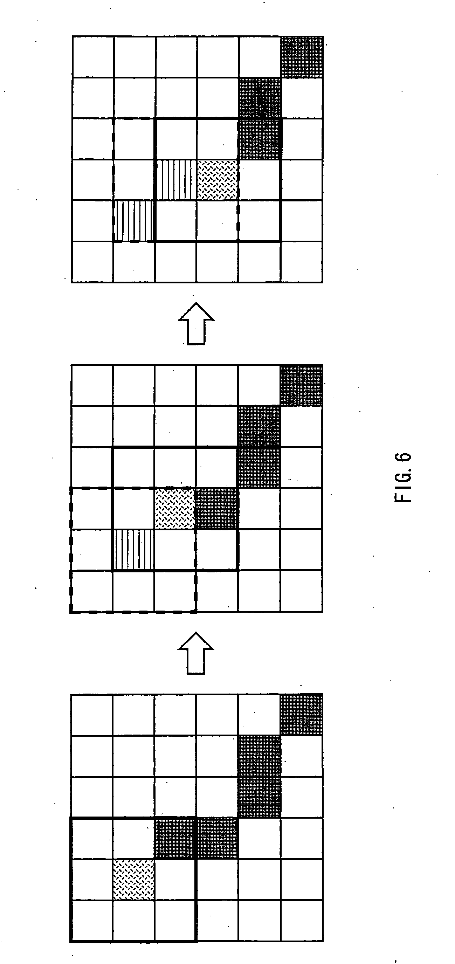

Fig. 6 illustrates a specific method of tracking. In Fig. 6, the characteristic point extraction section 22 sequentially tracks the blood vessel pixels of the segment blood vessel line from the starting point to the terminal point by performing a process of excluding the previous attention pixel (a pixel filled with horizontal lines) from the blood vessel pixels around the current attention pixel (a hatched pixel) and choosing from them the next attention pixel until the blood vessel pixels around the current attention pixel include the terminal point.

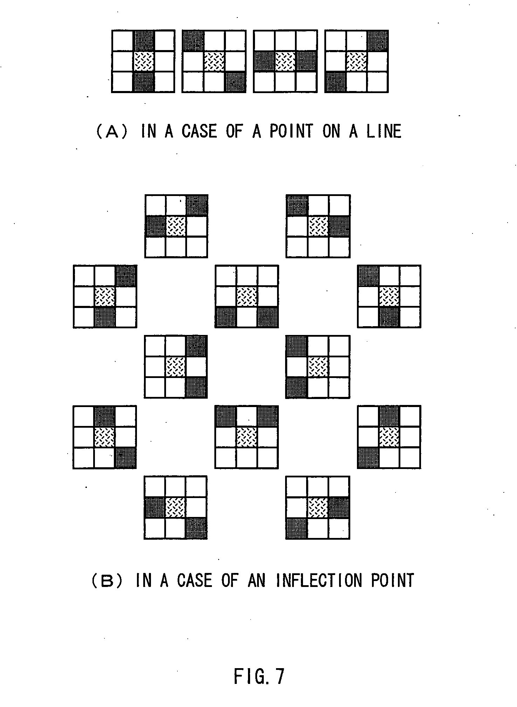

Since a series of the blood vessel pixels of the segment blood vessel line represents a blood vessel line's segment extending from one diverging or end point to the next diverging or end point, there is no diverging point between them. This means that the attention pixel must be either a point on a line or the inflection point. Incidentally, Fig. 7 shows a pattern of how the points on the line and the inflection points appear. In Fig. 7, like Fig. 4, a hatched area represents the attention pixel; a black area represents the blood vessel pixel (the white pixel), for ease of explanation.

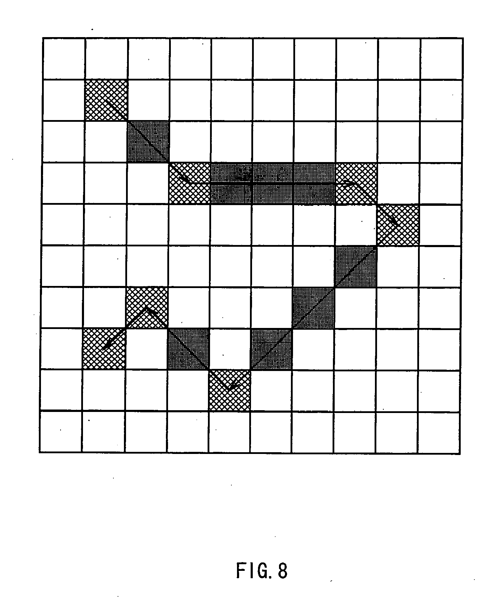

For example, as shown in Fig. 8, during the process of the tracking between the starting and terminal points (those hatched in a diagonal grid-like pattern), if the linearity of the series of the previous attention pixels including the current attention pixel ends with the next attention pixel (or the blood vessel pixel), the characteristic point extraction section 22 detects the current attention pixel as the inflection point (a pixel hatched in a grid-like pattern).

After reaching the terminal point, the characteristic point extraction section 22 recognizes a series of characteristic points extending from the segment blood vessel line' starting point to the terminal point as one group.

In this manner, using the end and diverging points as the points of reference, the characteristic point extraction section 22 detects the inflection points of each segment blood vessel line extending from one diverging or end point to the next diverging or end point in the second stage of the process.

(B-3) Removal of the inflection points

Then, in the third stage of the process, the characteristic point extraction section 22 recognizes the group of then characteristic points, or the series of the characteristic points extending from the segment blood vessel line' starting point to the terminal point, as one processing unit (referred to as segment blood vessel constituting-points row, hereinafter), and removes the inflection points from the segment blood vessel line.

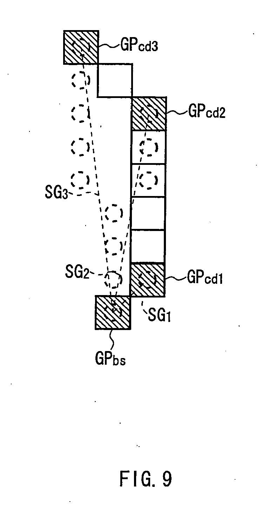

The same removal process is applied to all the segment blood vessel constituting-points rows; the following provides a detailed description about the process applied to one segment blood vessel constituting-points row, with reference to Fig. 9. In Fig. 9, a square area represents a pixel (referred to as original blood vessel pixel, hereinafter) constituting the original blood vessel line; a hatched area represents the end or diverging point of the original blood vessel pixel.

On the segment blood vessel constituting-points row, there are the original blood vessel pixels from the characteristic point (referred to as reference point, hereinafter) $GP_{bs}$, which was selected as a point of reference, to removal candidate points $GP_{cd}$ ($GP_{cd1}$ to $GP_{cd3}$); there are segments SG ($SG_1$ to $SG_3$) extending from the reference point $GP_{bs}$ to the removal candidate points $GP_{cd}$. The characteristic point extraction section 22 counts the number of the segment SG's pixels (referred to as segment pixels, hereinafter) overlapped with the original blood vessel pixels, and gradually moves the removal candidate point $GP_{cd}$ toward the terminal point until the ratio of the number of the overlapped pixels to the number of pixels existing between the reference point $GP_{bs}$ and the removal candidate point $GP_{cd}$ becomes less than a predetermined threshold (referred to as overlap ratio threshold).

In Fig. 9, all the segment pixels (two pixels) of the segment $SG_1$ are overlapped with the original blood vessel pixels (two pixels) existing between the reference point $GP_{bs}$ and the corresponding removal candidate point $GP_{cd1}$, and this means that the overlap ratio is "2/2." Moreover, the segment pixels (seven pixels) of the segment $SG_2$ are overlapped with four of the original blood vessel pixels (seven pixels) existing between the reference point $GP_{bs}$ and the corresponding removal candidate point $GP_{cd2}$, and this means that the overlap ratio is "4/7." Moreover, the segment pixels (nine pixels) of the segment $SG_3$ are overlapped with two of the original blood vessel pixels (nine pixels) existing between the reference point $GP_{bs}$ and the corresponding removal candidate point $GP_{cd3}$, and this means that the overlap ratio is "2/9."

If the overlap ratio of the segment pixels of the segment SG3 is less than the overlap ratio threshold the characteristic point extraction section 22 removes the characteristic point $GP_{cd1}$ between the characteristic point, which was selected as the removal candidate point $GP_{cd2}$ immediately before the removal candidate point (characteristic point) $GP_{cd3}$, and the reference joint $GP_{bs}$. Accordingly, even if the characteristic point $GP_{cd1}$ is removed, the segment $SG_2$ extending from the reference point $GP_{bs}$ to the remaining characteristic point $GP_{cd2}$ can substantially represents the original blood vessel line.

Here, if the overlap ratio threshold is too small, the characteristic point $GP_{cd1}$ may be removed even when the segment SG3 does not resemble a series of original blood vessel pixels (a segment blood vessel line) extending from the reference point $GP_{bs}$ to the removal candidate point $GP_{cd3}$. If the overlap ratio threshold is too large, the characteristic point $GP_{cd1}$ may be left.

Accordingly, in the present embodiment, the characteristic point extraction section 22 changes the overlap ratio threshold according to the length of the segment. More specifically, assume that the reference point is $GP_J$ (J = 1, 2, ......, M (M: integer)) and that the ath removal candidate point from the reference point is $GP_{J+\alpha}$. The following describes a case of calculating the overlap ratio of the segment $GP_J$ - $GP_{J+\alpha}$ extending from the reference point $GP_J$ to the removal candidate point $GP_{J+\alpha}$ with respect to the original blood vessel pixels: If the length of the previous segment $GP_{J+(\alpha-1)}$ - $GP_{J+\alpha}$, whose overlap ration was calculated immediately before the current one, is greater than or equal to a predetermined threshold (referred to as segment length threshold), a first overlap ration threshold is set; if it is less than the segment length threshold, a second overlap ratio threshold, which is larger than the first overlap ratio threshold, is set.

This allows the appropriate selection of the inflection points to be removed, so that a line passing through the inflection points on the segment blood vessel line resembles the segment blood vessel line.

More specifically, the removal process of the inflection points starts from the starting point of the segment blood vessel constituting-points row; Fig. 34 shows a procedure of this process. This means that the characteristic point extraction section 22 selects the starting point of the segment blood vessel constituting-points row as the reference point, and selects the first characteristic point from the reference point as the removal candidate point (step SP1).

Then, the characteristic point extraction section 22 makes a determination as to whether this is a case in which it calculates the overlap ratio for the first time after starting the removal process of the inflection points or a case in which it makes a determination as to whether the length of the previous segment $GP_{J+(\alpha-1)}$ - $GP_{J+\alpha}$, which appeared immediately before the segment $GP_J$ - $GP_{J+\alpha}$ extending from the current reference point $GP_J$ to the removal candidate point $GP_{J+\alpha}$, is less than the segment length threshold (step SP32).

If this is the case in which it is the first time to calculate the overlap ration after starting the removal process of the inflection point or the case in which the length of the previous segment $GP_{J+(\alpha-1)}$ - $GP_{J+\alpha}$ is less than the segment length threshold, the characteristic point extraction section 22 sets the first overlap ratio threshold as the overlap ratio threshold (step SP33), calculates the overlap ratio of the current segment $GP_J$ - $GP_{J+\alpha}$ extending from the reference point $GP_J$ to the removal candidate point $GP_{J+\alpha}$ with respect to the original blood vessel pixels (step SP34), and makes a determination as to whether this overlap ratio is greater than or equal to the first overlap ratio threshold (step SP35).

Whereas, if this is the case in which this is not the first time to calculate the overlap ration after starting the removal process of the inflection point and the case in which the length of the previous segment $GP_{J+(\alpha-1)}$ - $GP_{J+\alpha}$ is greater than or equal to the segment length threshold, the characteristic point extraction section 22 sets the second overlap ratio threshold as the overlap ratio threshold (step SP36), calculates the overlap ratio of the current segment $GP_J$ - $GP_{J+\alpha}$ extending from the reference point $GP_J$ to the removal candidate point $GP_{J+\alpha}$ with respect to the original blood vessel pixels (step SP34), and makes a determination as to whether this overlap ratio is greater than or equal to the second overlap ratio threshold (step SP35).

Here, if the overlap ratio is greater than or equal to the overlap ratio threshold, this means that the current segment $GP_J$ - $GP_{J+\alpha}$ extending from the reference point $GP_J$ to the removal candidate point $GP_{J+\alpha}$ resembles, or is the same as, the original blood vessel line extending from the reference point $GP_J$ to the removal candidate point $GP_{J+\alpha}$.

In this case, the characteristic point extraction section 22 makes a determination as to whether the current removal candidate point $GP_{J+\alpha}$ is the terminal point of the segment blood vessel constituting-points row (step SP37); if it is not the terminal point, the characteristic point extraction section 22 selects the next characteristic point, which is closer to the terminal point than the current removal candidate point $GP_{J+\alpha}$ is, as a new removal candidate point $GP_{J+\alpha}$ (step SP38) before returning to the above-described process (step SP32).

Whereas, if the overlap ratio is less than or equal to the overlap ratio threshold, this means that the current segment $GP_J$-$GP_{J+\alpha}$ extending from the reference point $GP_J$ to the removal candidate point $GP_{J+\alpha}$ is completely different from the original blood vessel line extending from the reference point $GP_J$ to the removal candidate point $GP_{J+\alpha}$

In this case, the characteristic point extraction section 22 removes all the characteristic points between the characteristic point, which was selected as the removal candidate point $GP_{J+\alpha}$ immediately before the current one, and the current reference point (characteristic point) $GP_J$ (step SP39).

Then, the characteristic point extraction section 22 makers a determination as to whether the current removal candidate point $GP_{J+\alpha}$ is the terminal point of the segment blood vessel constituting-points row (step SP40); if it is not the terminal point, the characteristic point extraction section 22 selects the current removal candidate point $GP_{J+\alpha}$ as the reference point $GP_J$ and the next characteristic point, which is closer to the terminal point than the reference point $GP_J$ is, as a new removal candidate point $GP_{J+\alpha}$ (step SP41) before returning to the above-noted process (steep SP32).

Whereas, if the determination by the characteristic point extraction section 22 is that the current removal candidate point $GP_{J+\alpha}$ is the terminal point of the segment blood vessel constituting-points row (step SP37(Y) or step SP40(Y)), the characteristic point extraction section 22 removes all the characteristic points between the current removal candidate point (characteristic point) $GP_{J+\alpha}$ and the current reference point (characteristic point) $GP_J$ (step SP42) before ending this removal process of the inflection points.

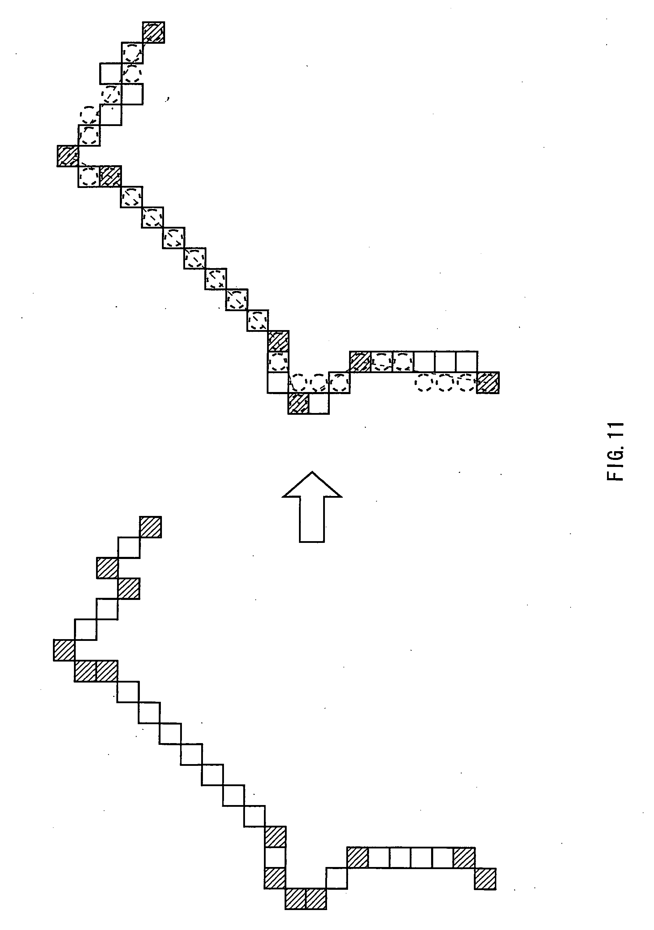

In that manner, the characteristic point extraction section 22 performs the removal process of the inflection points. Incidentally, Fig. 11 shows those before and after the removal process. In the case of Fig. 11, the segment length threshold for the removal process is 5 [mm]; the first overlap ratio threshold is 0.5 (50[%]); the second overlap ratio threshold is 0.7 (70[%]). Moreover, in Fig. 35, a square area represents the original blood vessel pixel; a circular area represents the pixel constituting the segment; a hatched area represents the end or inflection point' of the original blood vessel pixel.

It is obvious from Fig. 11 that the above removal process has appropriately removed the inflection point; therefore, a line passing through the inflection points on the segment blood vessel line resembles the segment blood vessel line.

(B-4) Removal of the end point

Then, in the fourth stage of the process, the characteristic point extraction section 22 chooses, from among three or four segment blood vessel lines extending from the diverging point on the blood vessel line, the two segment blood vessel lines that, if combined, resembles a straight line, and connects them as one segment blood vessel line, thereby removing the starting or terminal point, which was the end point of the two segment blood vessel line. Incidentally, if the width of the blood vessel (the blood vessel line) is one pixel, the number of segment blood vessel lines extending from the diverting point must be three or for, as described above with reference to Fig. 4.

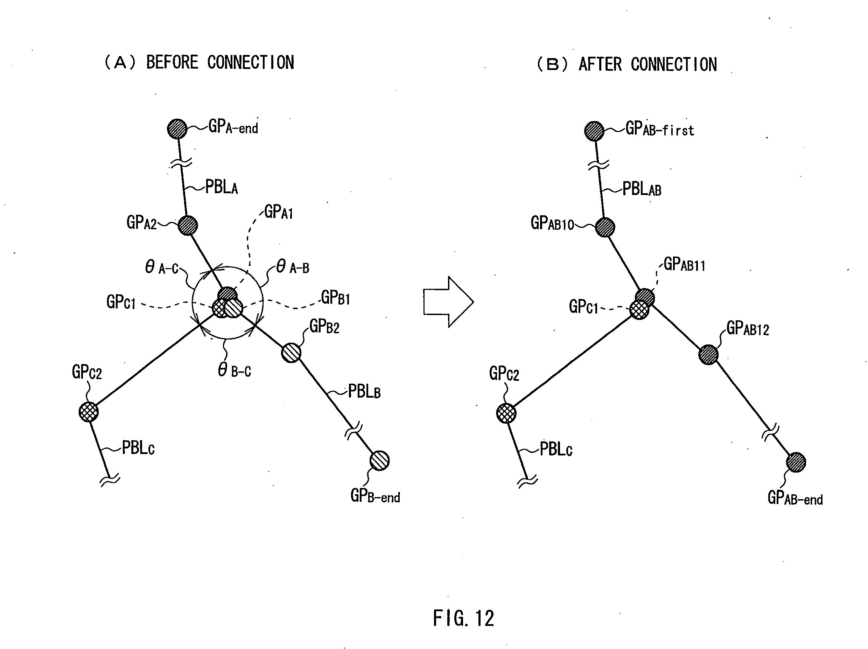

More specifically, for example, as shown in Fig. 12 (A), assume that the three segment blood vessel lines $PBL_A$, $PBL_B$, and $PBL_C$ are extending from the diverging points GP ($GP_{A1}$, $GP_{B1}$, and $GP_{C1}$). The characteristic point extraction section 22 calculates the cosines ($\cos(\theta_{A-B})$, $\cos(\theta_{A-C})$, $\cos(\theta_{B-C})$) of the crossing angles $\theta_{A-B}$, $\theta_{A-C}$, and $\theta_{B-C}$ of each pair of the segment blood vessel lines $PBL_A$, $PBL_B$, and $PBL_C$.

Here, if the smallest cosine cas ($\theta_{A-B}$) is less than a predetermined threshold (referred to as cosine threshold, hereinafter), this means that the crossing angle of the segment blood vessel lines is close to 180 degrees. In this case, the characteristic point extraction section 22 recognizes the pair of the segment blood vessel lines' segment blood vessel constituting-points rows $GP_{A1}$, $GP_{A2}$, ...., $GP_{A-END}$ and $GP_{B1}$, $GP_{B2}$, ...., $GP_{B-END}$ corresponding to the cosine $\cos(\theta_{A-B})$; recognizes the both ends of these segment blood vessel constituting-points rows; regards the points $GP_{A-END}$ and $GP_{B-END}$, which have not been overlapped with each other, as the starting and end points; and recognizes the characteristic points between the starting and end points as one group.

As a result, the pair of the segment blood vessel lines $PBL_A$ and $PBL_B$ is combined. For example, as shown in Fig. 12 (B), the number of the segment blood vessel constituting-points row $GP_{AB-first}$, ....., $GP_{AB10}$, $GP_{AB11}$, $GP_{AB12}$, ...., $GP_{AB-end}$ of the combined segment blood vessel line $PBL_{AB}$ is one less than the number of the pair of the segment blood vessel lines' segment blood vessel constituting-points rows, which are not combined. This is because the two diverging points $GP_{A1}$ and $GP_{B2}$, which were the starting points of the segment blood vessel lines' segment blood vessel constituting-points rows, are replaced by one middle point $GP_{AB11}$. Incidentally, combining the pair of the segment blood vessel lines $PBL_A$ and $PBL_B$ does not change the shape of the blood vessel line, or the segment blood vessel line $PBL_{AB}$.

Whereas, if the smallest cosine $\cos(\theta_{A-B})$ is greater than the cosine threshold, the characteristic point extraction section 22 does not recognize any group. If there are other diverging points left, the characteristic point extraction section 22 recognizes the next diverging point as a processing target; if not, the characteristic point extraction section 22 ends the process.

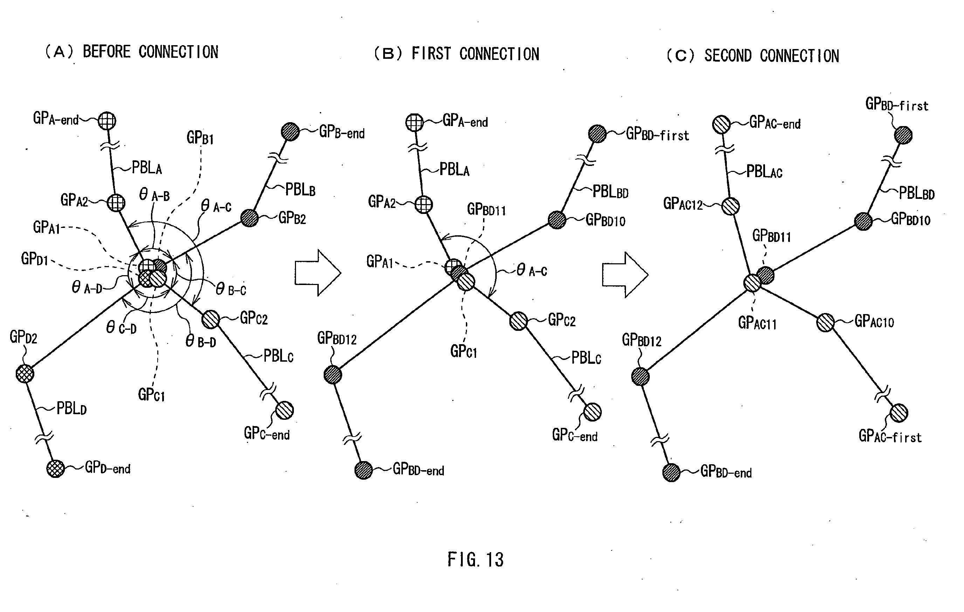

On the other hand, for example, as shown in Fig. 13(A), assume that there are four segment blood vessel lines $PBL_A$, $PBL_B$, $PBL_C$ and $PBL_D$ extending from the diverging points GP ($GP_{A1}$, $GP_{B1}$, $GP_{C1}$, and $GP_{D1}$). The characteristic point extraction section 22 calculates the cosines (cos ($\theta_{A-B}$), cos ($\theta_{A-C}$), cos ($\theta_{A-D}$), cos($\theta_{B-C}$), cos ($\theta_{B-D}$), cos($\theta_{C-D}$)) of the crossing angles $\theta_{A-B}$, $\theta_{A-C}$, $\theta_{A-D}$, $\theta_{B-C}$, $\theta_{B-D}$ and $\theta_{C-D}$ of each pair of the segment blood vessel lines PBL$_A$, PBL$_B$, PBL$_C$ and PBL$_D$.

Here, if the smallest cosine cos ($\theta_{B-D}$) is less than a second cosine threshold, this means that the crossing angle of the segment blood vessel lines is close to 180 degrees. In this case, the characteristic point extraction section 22 recognizes the pair of the segment blood vessel lines' segment blood vessel constituting-points rows GP$_{B1}$, GP$_{B2}$, ..., GP$_{B\_END}$ and GP$_{D1}$, GP$_{D2}$, ..., GP$_{D-END}$ corresponding to the cosine cos ($\theta_{B-D}$);recognizes the both ends of these segment blood vessel constituting-points rows; regards the points GP$_{B-END}$ and GP$_{D\_END}$, which have not been overlapped with each' other, as the starting and end points; and recognizes the characteristic points between the starting and end points as one group.

As a result, the pair of the segment blood vessel lines PBL$_B$ and PBL$_D$ is combined. For example, as shown in Fig. 13(B), the number of the segment blood vessel constituting-points row GP$_{BD-first}$, ...., GP$_{BD10}$, GP$_{BD11}$, GP$_{BD12}$, ..., GP$_{BD-end}$ of the combined segment blood vessel line PBL$_{BD}$ is one less than the number of the pair of the segment blood vessel lines' segment blood vessel constituting-points rows, which are not combined. This is because the two diverging points GP$_{B1}$ and GP$_{D2}$, which were the starting points of the segment blood vessel lines' segment blood vessel constituting-points rows, are replaced by one middle point GP$_{BD11}$. Incidentally, combining the pair of the segment blood vessel lines PBL$_B$ and PBL$_D$ does not change the shape of the blood vessel line, or the segment blood vessel line PBL$_{BD}$.

In this case with the four diverging points., there are the uncombined segment blood vessel lines PBL$_A$ and PBL$_C$ left even after the pair of the segment blood vessel lines PBL$_B$ and PBL$_D$ are combined; if the cosine cos($\theta_{A-C}$) of the crossing angle $\theta_{A-C}$ of the remaining pair of the segment blood vessel lines PBL$_A$ and PBL$_C$ is less than the cosine threshold, for example, as shown in Fig. 13(C), the characteristic point extraction section 22 transforms the segment blood vessel constituting-points rows of the segment blood vessel lines PBL$_A$ and PBL$_C$ into one segment blood vessel constituting-points row GP$_{AC-first}$, ..., GP$_{AC10}$, GP$_{AC11}$, GP$_{AC12}$, ....., GP$_{AC-end}$ in the same way as it has done for the segment blood vessel constituting-points rows of the segment blood vessel lines PBL$_B$ and PBL$_D$; and removes one of the starting points GP$_{A1}$ and GP$_{C1}$, which were the end points of the original segment blood vessel constituting-points rows.

Whereas, if the smallest cosine cos ($\theta_{A-B}$) is greater than the cosine threshold, the characteristic point extraction section 22 does not recognize any group. If there are other diverging points left, the characteristic point extraction section 22 recognizes the next diverging point as a processing target; if not, the characteristic point extraction section 22 ends the process.

Incidentally, in Figs. 12 and 13, the overlapping points have the same positional (or coordinate) information. But since each belongs to a different group, they are distinguished for ease of explanation.

In this manner, in the fourth stage of the process, the characteristic point extraction section 22 recognizes the blood vessel lines extending from the diverging points on the blood vessel line; recognizes the pair of the blood vessel lines whose crossing angle's cosine is less than the second cosine threshold; and combines the segment blood vessel lines' segment blood vessel constituting-points rows into one segment blood vessel constituting-points row, thereby removing either the starting or terminal point, which was the end point of the pair of the segment blood vessel constituting-points rows.

As described above, the characteristic point extraction section 22 detects the end, diverging and inflection points (the first and second stages); and extracts, from among these points, the blood vessel lines' characteristic points on group (segment blood vessel line row) basis with each group being based on the end and diverging points, so that a line passing through the characteristic points resemble both a blood vessel line and a straight line (the third and fourth stagers).

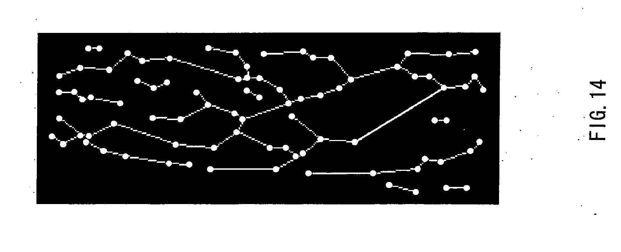

For example, if the image (the image data D21) shown in Fig. 3(B) is input into the characteristic point extraction section 22, the characteristic point extraction process of the characteristic point extraction section 22 extracts the characteristic points from the image, as shown in Fig. 14, so that a line passing through the characteristic points resembles both a blood vessel line and a straight line.

The characteristic point extraction section 22 stores the data (the image data D1) of the image of the extracted characteristic points in the flash memory 13.

(2-2) Data generation mode

On the other hand, if the determination by the control section 10 is that it should start the data generation mode, the control section 10 enters the data generation mode, which is an operation mode, and makes a determination as to whether a plurality of image data sets D1i (i = 1, 2, ......, n) is stored in the flash memory 13.

If there is a plurality of image data sets D1i in the flash memory 13, the control section 10 starts a data generation process using these image data sets D22i.

The following describes a distinguishing indicator for a blood vessel pattern and a pseudo blood vessel pattern, before the detailed description of the data generation process. In the following example, the pseudo blood vessel pattern is obtained as a result of taking a picture of a gummi candy (an elastic snuck, like rubber, made of gelatin, sugar, and thick malt syrup) or radish.

(2-2-A) Distinguishing indicator for the blood vessel pattern and the pseudo blood vessel pattern

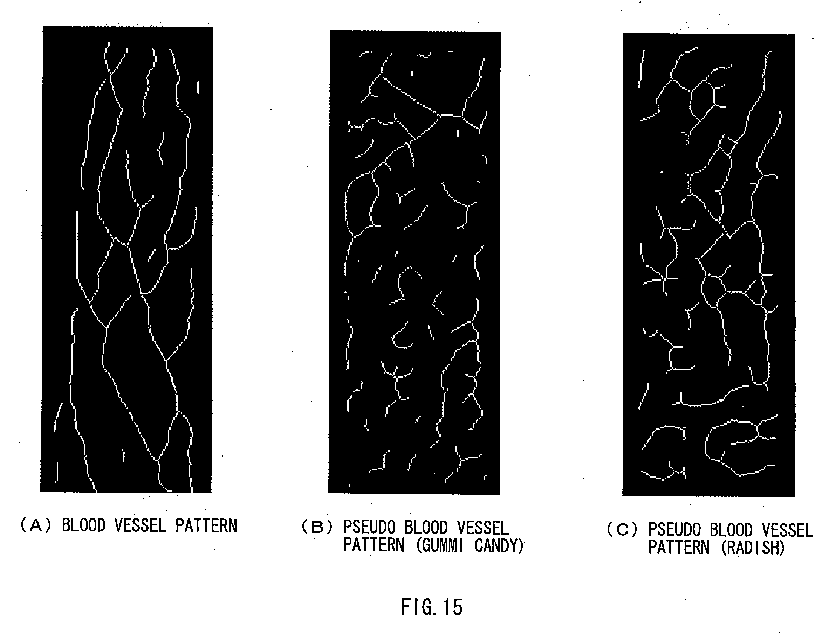

Fig. 15 shows the blood vessel pattern obtained from a living body's finger and the pseudo blood vessel patterns obtained from the gummi candy and the radish. As shown in Fig. 15, the blood vessel pattern (Fig. 15(A)) and the pseudo blood vessel patterns (Fig. 15(B)) look like the same pattern overall.

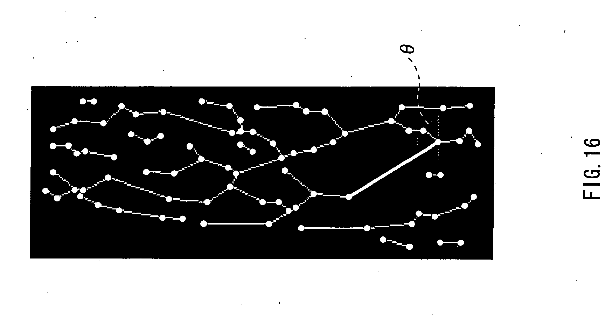

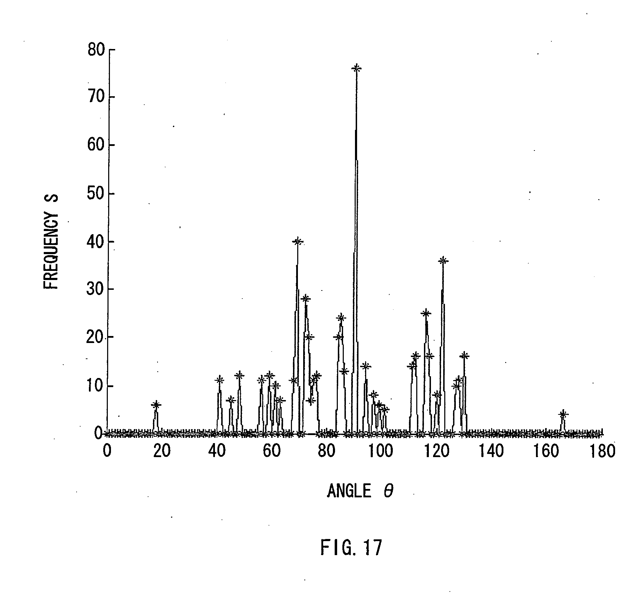

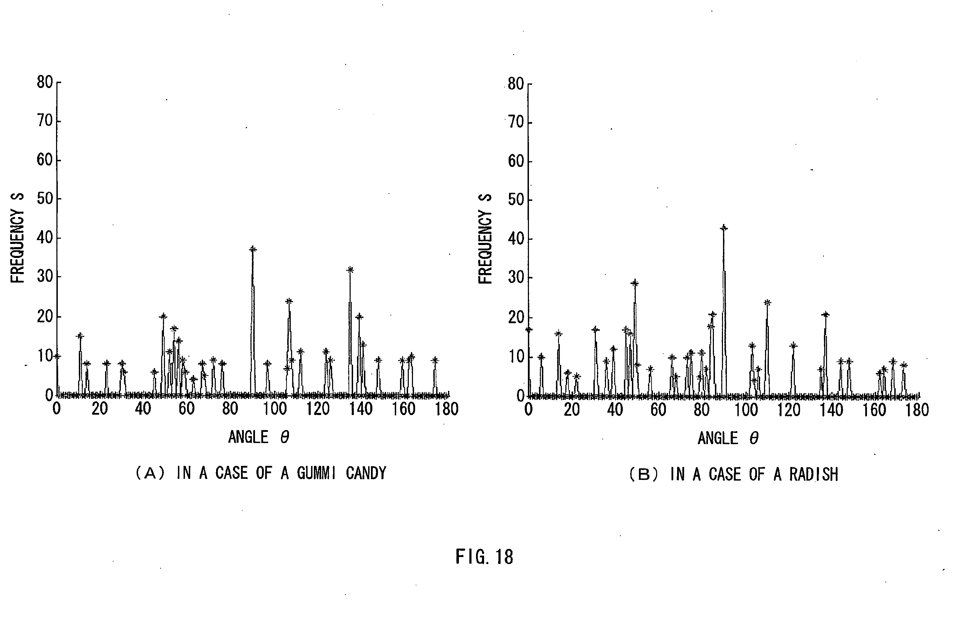

Here, as shown in Fig. 16, attention is focused on an angle $\theta$ of a segment connecting the characteristic points and an horizontal axis that passes through the end point of that segment. Then, the distribution of the angles of the image's horizontal direction with respect to the segments connecting the characteristic points of the pattern is represented with the length of the segment (the number of pixels constituting the segment) represented as frequency. As for the blood vessel pattern (Fig. 17), the concentration is observed at 90-degrees point and around it; as for the pseudo blood vessel pattern (Fig. 18(A)) obtained from the gummi candy and the pseudo blood vessel pattern (Fig. 18(B)) obtained from the radish, it spreads between 0 degree and 180 degrees, showing a lack of regularity. This is because the blood vessel pattern does not spread but has certain directivity '(along the length of the finger).

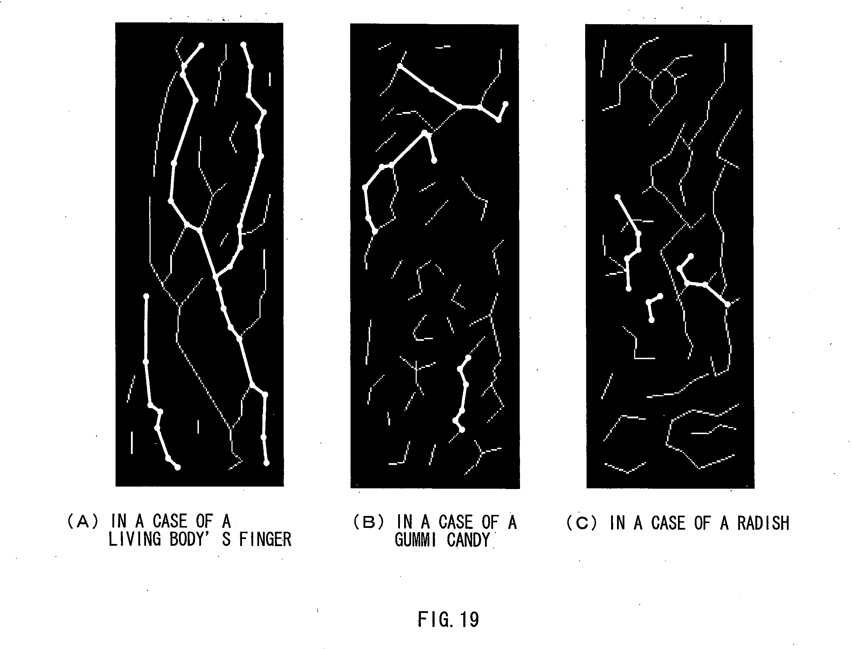

Moreover, there is a tendency that the blood vessel pattern's segments resembling a straight line (Fig. 19 (A)) are longer than those of the pseudo blood vessel pattern (Fig. 19(B)) obtained from the gummi candy and the pseudo blood vessel pattern (Fig. 19(c)) obtained from the radish. Therefore, the number of the segments (the segment blood vessel lines) recognized as groups by the above characteristic point extraction process is less than that of the pseudo blood vessel patterns.

Accordingly, the distinguishing indicators of the blood vessel pattern and the pseudo blood vessel pattern may be: first, the spread of the angle distribution; second, the intensity of the angle distribution at the 90-degrees point and around it; and, third, the number of the segments recognized as groups.

The spread of the angle distribution, for example, can be represented by the variance of the distribution (or standard deviation). This means that if the segments connecting the characteristic points (those extracted from the pattern to represent the characteristic) are represented by $l_K$ (K= 1, 2, ......, N (N: integer)), the angles of the image's horizontal direction with respect to the segments are represented by $\theta_K$, and the length of the segments is represented by $L_K$, the average of the distribution of the angles $\theta_K$ of the segments $l_K$ is represented, because of the length $L_K$ of the segments being weighted, as follows:

$$\overline{\theta} = \frac{\displaystyle\sum_{\theta=0}^{179} S_\theta \theta}{\displaystyle\sum_{K=1}^{n} L_K} = \frac{\displaystyle\sum_{K=1}^{n} L_K \theta_K}{\displaystyle\sum_{K=1}^{n} L_K} \qquad \cdots\cdots (1)$$

and the variance is represented as follows

$$\sigma^2 = \frac{\displaystyle\sum_{\theta=0}^{179} S_\theta \left(\theta_K - \overline{\theta}\right)^2}{\left(\displaystyle\sum_{K=1}^{n} L_K\right) - 1} = \frac{\displaystyle\sum_{K=1}^{n} L_K \left(\theta_K - \overline{\theta}\right)^2}{\left(\displaystyle\sum_{K=1}^{n} L_K\right) - 1} \qquad \cdots\cdots (2)$$

Moreover, the intensity of the distribution can be represented by a ratio of the size of the distribution existing within a predetermined angular range around the 90-degrees point to the size of the total distribution. This means that if the angular range is "lower [degree] < $\theta$ < upper [degree]" and the size of the distribution is S, the intensity of the distribution is represented as follows:

$$P_{lower}^{upper} = 100 \times \frac{\sum\limits_{\theta=lower}^{upper} S_\theta}{\sum\limits_{\theta=0}^{179} S_\theta} \qquad\qquad \cdots\cdots (3)$$

Moreover, the number of segments recognized as groups is the number of groups allocated after the above characteristic point extraction process, i.e. the number of the remaining groups (the segment blood vessel constituting-points rows) after the characteristic point extraction section 22's infection point detection process of recognizing the rows of the characteristics points (the segment blood vessel constituting-points rows) extending from the starting points through the inflection points to the terminal points and combining the groups (the segment blood vessel constituting-points rows) as one group so: that it resembles a straight line.

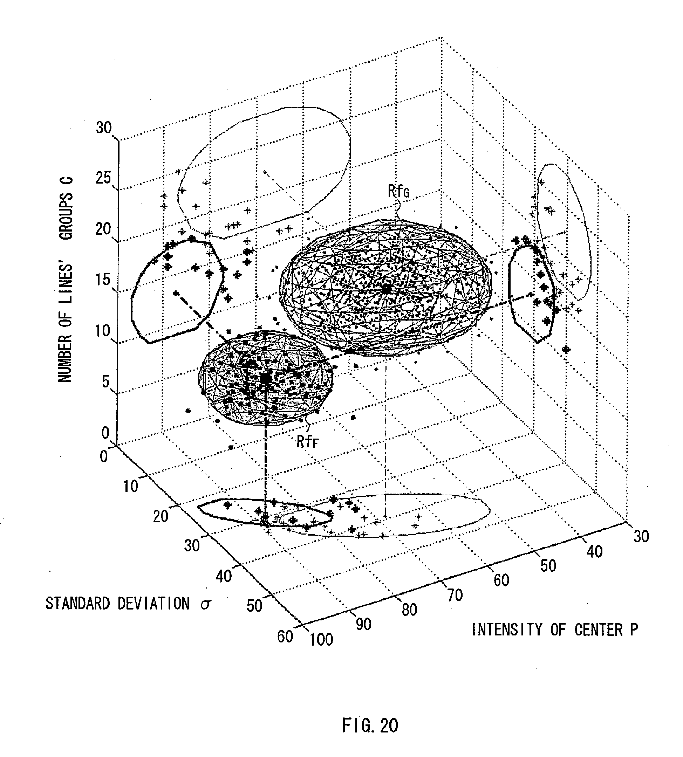

Here, Fig. 20 shows the result of distinguishing between the blood vessel pattern and the pseudo blood vessel pattern obtained from the gummi candy using the three distinguishing indicators. In Fig. 20, the lightly plotted points are those obtained from the pseudo blood vessel pattern of the gummi candy; the number of samples is 635. Meanwhile, the darkly plotted points are those obtained from the blood vessel pattern, which is selected from the five blood vessel patterns generated as a result of taking a picture of a finger five times: the selected blood vessel pattern has the furthest Mahanobis distance from the center of the distribution of the lightly plotted points, and the number of samples is 127.

Moreover, in Fig. 20, "$Rf_G$" represents a boundary (referred to as pseudo blood vessel boundary, hereinafter) and the pseudo blood vessel pattern is determined based on this boundary. Specifically, its Mahanobis distance is 2.5 from the center of the distribution of the lightly plotted points. On the other hand, "$Rf_F$" represents a boundary (referred to as blood vessel boundary, hereinafter) and the blood vessel pattern is determined based on this boundary. Specifically, its Mahanobis distance is 2.1 from the center of the distribution of the darkly plotted points. By the way, the plotted point "•" exists inside the pseudo blood vessel boundary $Rf_G$ or the blood vessel boundary $Rf_F$, while the plotted point "*" does not exist inside the pseudo blood vessel boundary $Rf_G$ or the blood vessel boundary $Rf_F$.

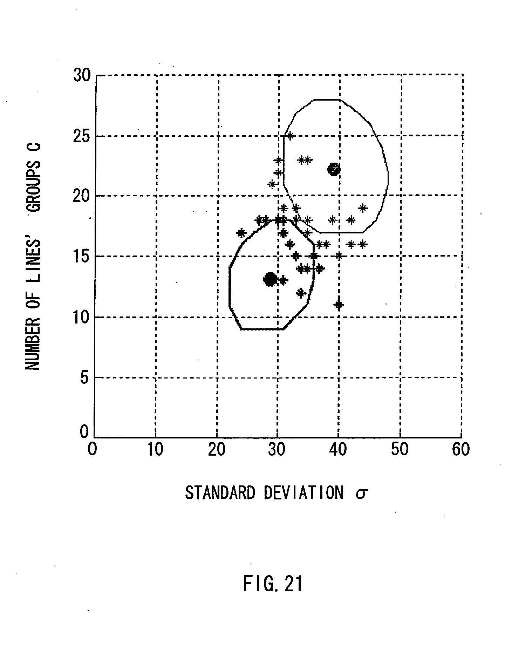

It is obvious from Fig. 20 that the blood vessel pattern can substantially be distinguished from the pseudo blood vessel pattern; as long as a $\delta$-C plane of the three-dimensional distribution of Fig. 20 is concerned, the blood vessel pattern can be completely distinguished from the pseudo blood vessel pattern, as shown in Fig. 21. Incidentally, in Figs. 20 and 21, the spread of the angle distribution is represented by the standard deviation.

(2-2-B) Detailed description of the data generation process

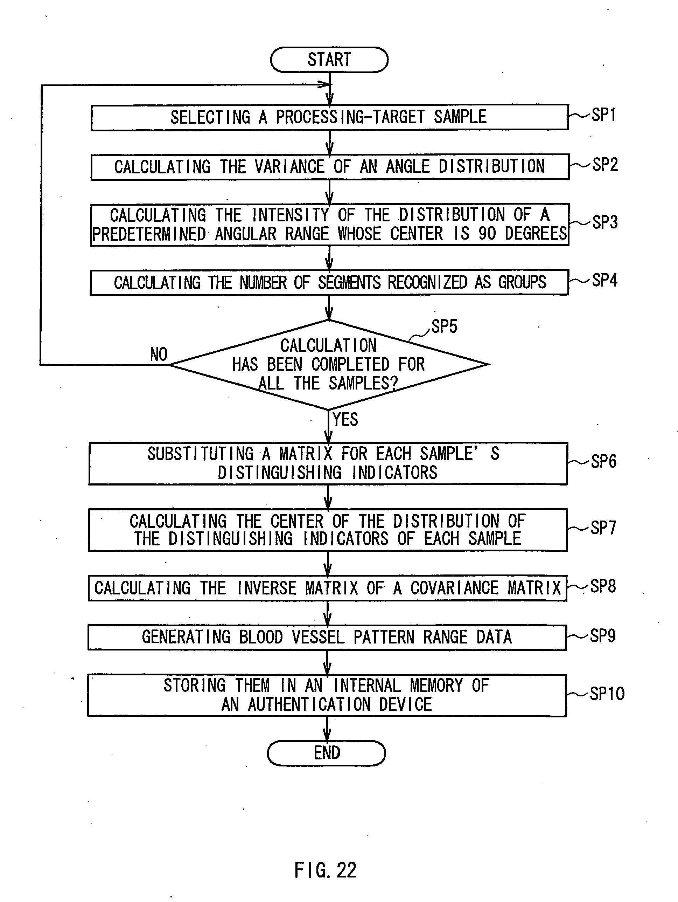

The following provides a detailed description of the data generation process. The data generation process is performed according to a flowchart shown in Fig. 22.

That is, the control section 10 reads out a plurality of samples of the image data sets D1i from the flash memory 13, and calculates the three distinguishing indicators for each blood vessel pattern of the image data sets D1i (i.e. the variance of the angle distribution, the intensity of the angle distribution, and the number of the segments recognized as groups) (a loop of step SP1 to SP5).

Moreover, after the calculation of the distinguishing indicators of each sample's blood vessel pattern (step SP5: YES), the control section 10 substitutes a matrix with the each sample's blood vessel pattern and the blood vessel pattern's distinguishing indicators expressed in columns and rows respectively:

$$R_f = \begin{pmatrix} \sigma_1 & P_1 & C_1 \\ \sigma_2 & P_2 & C_2 \\ \sigma_3 & P_3 & C_3 \\ & \vdots & \\ \sigma_{n-1} & P_{n-1} & C_{n-1} \\ \sigma_n & P_n & C_n \end{pmatrix} = \begin{pmatrix} \sigma_i & P_i & C_i \end{pmatrix} \qquad \cdots\cdots (4)$$

wherein $\sigma$ represents the variance of the angle distribution; P represents the intensity of the angle distribution; C represents the number of the segments recognized as groups (stepp SP6).

Then, the control section 10 calculates from the matrix of the distinguishing indicators the center of the distribution of the distinguishing indicators of each sample as follows (step SP7):

$$\overline{R_f} = \frac{1}{n}\left[ \sum_{K=1}^{n} \sigma_K \quad \sum_{K=1}^{n} P_K \quad \sum_{K=1}^{n} C_K \right] = \frac{1}{n}\left[ \sum_{K=1}^{n} m_K(1) \quad \sum_{K=1}^{n} m_K(2) \quad \sum_{K=1}^{n} m_K(3) \right] \qquad \cdots\cdots (5)$$

and then calculates the inverse matrix of the covariance matrix (step SP8). Incidentally, the covariance matrix represents the degree of the spread of the distribution of the distinguishing indicators of each sample; its inverse number is used for the calculation of the Mahalanobis distance.

Then, the control section 10 generates the blood vessel pattern range data (which are data representing a range for which the determination of the blood vessel pattern should be made) by using the center of the distribution of the distinguishing indicators, which was calculated at step SP7, the inverse matrix of the covariance matrix, which was calculated at step SP8, and a predetermined blood vessel boundary number (whose Mahalanobis distance is "2.1" in the case of Fig. 20) (step SP9); stores the data in the internal memory of the authentication device (step SP10); and then ends the data generation process.

In this manner, using the following tendencies as the distinguishing indicators for the blood vessel pattern and the pseudo blood vessel pattern, the control section 10 generates the data (the center of the distribution of the distinguishing indicators, the inverse matrix of the covariance matrix, and the blood vessel boundary number) representing the range for which the determination of the blood vessel pattern should be made: the tendency that the blood vessel pattern does not spread but has certain directivity (along the length of the finger), and the tendency that of all the segments of the blood vessel pattern, the one resembling a straight line is longer than the others.

(3) Configuration of the authentication device

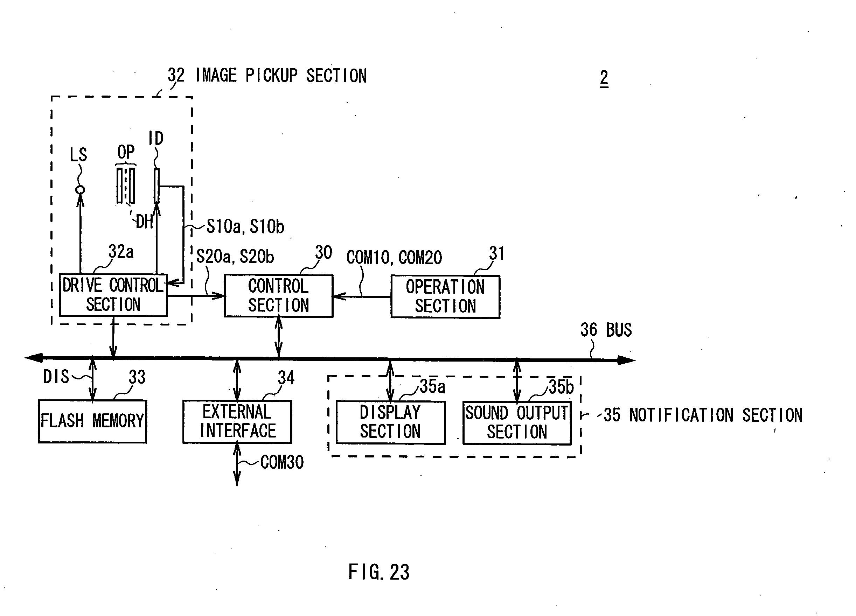

Fig. 23 illustrates the configuration of the authentication device. The data generation device 1 includes a control section 30 to which an operation section 31, an image pickup section 32, a flash memory 33, a external interface 34 and a notification section 35 are connected via a bus 36.

The control section 30 is a microcomputer including CPU that takes overall control of the authentication device 1, ROM that stores various programs and setting information, and RAM that serves as a work memory for CPU. Incidentally, the blood vessel pattern range data generated by the data generation device 1 are stored in ROM.

When a user operates the operation section 31, an execution command COM10 of a mode (referred to as blood vessel registration mode, hereinafter) in which the blood vessels of a registration-target user (referred to as registrant, hereinafter) are registered or an execution command COM20 of a mode (referred to as authentication mode, hereinafter) in which a determination as to whether a person is the registrant or not is made is given to the control section 30 from the operation section 31.

Based on the execution commands COM10 and COM20, the control section 30 makes a determination as to which mode it should start. Using a program corresponding to the determination, the control section 30 appropriately controls the image pickup section 32, the flash memory 33, the external interface 34 and the notification section 35 to run in blood vessel registration mode or authentication mode.

(3-1) Blood vessel registration mode

More specifically, if the determination is that it should start the blood vessel registration mode, the control section 30 enters the blood vessel registration mode, which is an operation mode, to control the image pickup section 32.

In this case, in a similar way to that of the image pickup section 12 (Fig. 1) of the data generation device 1, the image pickup section 32 drives and controls a near infrared beam source LS and an image pickup element ID. The image pickup section 32 also adjusts the position of an optical lens of an optical system OP and the aperture of an aperture diaphragm DH based on an image signal S10a that the image pickup element ID output as a result of taking a picture of an object put at a predetermined position of the authentication device 2. After the adjustment, the image pickup section 32 supplies an image signal S20a output from the image pickup element ID to the control section 30.

The control section 30 sequentially performs the same preprocessing process and characteristic point extraction process as those of the preprocessing section 21 and:characteristic point extraction section 22 (Fig. 2) of the data generation device 1 for the image signals S20a, in order to extract an object pattern from the image and to extract a series of characteristic points on group (segment blood vessel constituting-points row) basis, which extends from the starting point to the terminal point via the inflection point.

Then, based on the blood vessel pattern range data stored in ROM, the control section 30 performs a process (referred to as distinguishing process, hereinafter) to distinguish the object pattern as a blood vessel pattern or a pseudo blood vessel pattern; if it recognizes the object pattern as a blood vessel pattern, the control section 30 stores the characteristic points of the object pattern in the flash memory 33 as information (referred to as registrant identification data, hereinafter) DIS, which will be used for identifying the registrant, thereby completing the registration.

In this manner, the control section 30 performs the blood vessel registration mode.

(3-2) Authentication mode

On the other hand, if the determination by the control section 30 is that it should perform the authentication mode, the control section 30 enters the authentication mode and controls the image pickup section 32 in a similar way to when it performs the blood vessel registration mode.

In this case, the image pickup section 32 drives and controls the near infrared beam source LS and the image pickup element ID. The image pickup section 32 also adjusts the position of the optical lens of the optical system OP and the aperture of the aperture diaphragm DH based on an image signal S10b that the image pickup element ID output. After the adjustment, the image pickup section 32 supplies an image signal S20b output from the image pickup element ID to the control section 30.

The control section 30 sequentially performs the same preprocessing process and characteristic point extraction process as those of the above-described blood vessel registration mode for the image signals S20b and reads out the registrant identification data DIS from the flash memory 33, in which the data DIS has been registered.

Then, the control section 30 performs the same distinguishing process as that of the above-described blood vessel registration mode; if it distinguishes an object pattern extracted from the image signals S20b as the blood vessel pattern, the control section 30 then compares each of the characteristic points extracted from the object pattern as a group (segment blood vessel constituting-points row) extending from the starting point to the terminal point via the inflection point with the characteristic points of the registrant identification data DIS read out from the flash memory 33, thereby making a determination as to whether a person is the registrant (au authorized user) according to the degree of congruence.

Here, if the determination by the control.section 30 is that he is the registrant, the control section 30 generates an execution command COM. 30 in order to let an operation processing device (not shown), which is connected to the external interface 34, perform a predetermined operation. The control section 30 supplies this execution command COM30 to the operation processing device via the external interface 34.

The following describes the application of the operation processing device connected to the external interface 34. if locked door is applied, the execution command, COM30 transmitted from the control section 30 is to unlock the door; if a computer, which has a plurality of operation modes and whose current mode is limiting the use of some operation modes, is applied, the execution command COM30 transmitted from the control section 30 is to lift the limitation.

Incidentally, these two examples were described as the application. But there may be other applications. Moreover, in the present embodiment, the operation processing device is connected to the external interface 34. But instead of this, the authentication device 1 may contain the software and hardware of the operation processing device.

Whereas, if the determination by the control section 30 is that he is not the registrant, the control section 30 displays on a display section 35a of the notification section 35 information to that effect, and outputs sound through a sound output section 35b of the notification section 35, visually and auditorily notifying a user of the fact that he is not the registrant.

In that manner, the control section 30 performs the authentication mode.

(3-3) Detailed description of the distinguishing process

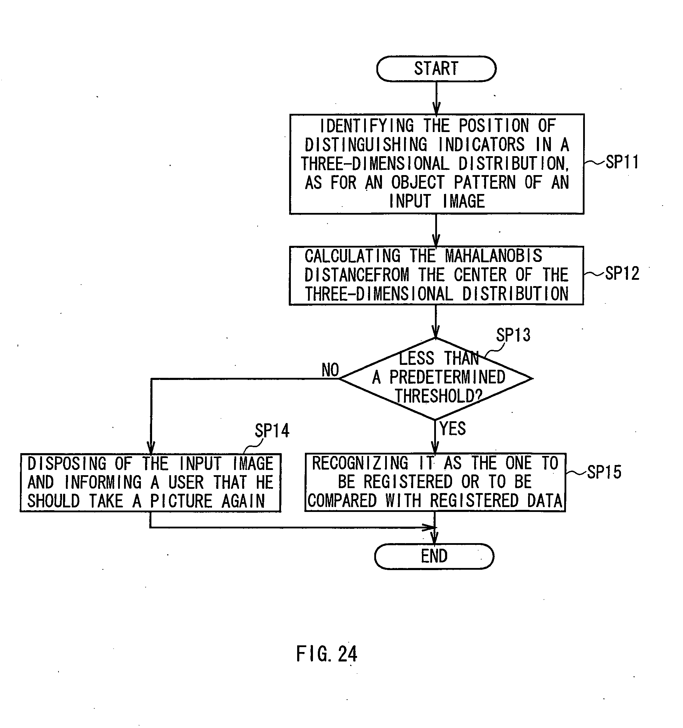

The following provides a detailed description of the distinguishing process by the control section 30. The distinguishing process is performed according to a flowchart shown in Fig. 24.

That is, after having sequentially performed the preprocessing process and the characteristic point extraction process for the image signals S20a or S20b that are input during the blood vessel registration mode or the authentication mode, the control section 30 starts the procedure of the distinguishing process. At step SP11, the control section 30 detects the variance of the angle distribution, the intensity of the angle distribution and the number of the segments recognized as groups from the object pattern extracted from the image signals S20a or S20b.

This detection determines the position of the object pattern, whose object is the current target of image capturing, in the three dimensional space (Fig. 20) of the distinguishing indicators of the plurality of sample patterns recognized as the authorized blood vessel patterns.

Then, at step SP12, the control section 30 calculates the Mahalanobis distance between the center of the three-dimensional distribution of the distinguishing indicators and the position of the object pattern based on the blood vessel pattern range data (the center of the distribution of the distinguishing indicators, the inverse matrix of the covariance matrix, and the blood vessel boundary number) stored in ROM.

More specifically, the Mahalanobis distance $D_{CP}$ is calculated by:

$$D_{CP} = \sqrt{(P - CT)^T \cdot Cov^{-1} \cdot (P - CT)} \qquad \cdots\cdots (6)$$

wherein CT is the center of the distribution of the distinguishing indicators; $Cov^{-1}$ is the inverse matrix of the covariance matrix; P is the position of the object pattern. The result of the calculation reveals where the object pattern, whose is the current target of image capturing, exists in the distribution (Fig. 20) of the plurality of sample patterns recognized as the authorized blood vessel patterns.

Then, at step SP13, the control section 30 makes a determination as to whether the Mahalanobis distance calculated at step SP12 is less than the blood vessel boundary number of the blood vessel pattern range data stored in ROM.

As shown in Fig. 20, the blood vessel boundary number represents the value of the boundary $Rf_F$ with respect to the center of the distribution of the distinguishing indicators: the determination of the blood vessel pattern should be made based on the boundary $Ri_F$. Accordingly, if the Mahalanobis distance is greater than the blood vessel boundary number, this means that the extracted object pattern should not be recognized as an appropriate blood vessel pattern since it may be a pseudo blood vessel pattern or a completely different patter from the blood vessel pattern.

In this case, the control section 30 proceeds to step SP14 and disposes of the object pattern extracted from the image signals S20a or S20b and its characteristic points, and informs a user, through the notification section 35 (Fig. 23), that it should take a picture again, before ending the distinguishing process.

Whereas, if the Mahalanobis distance is less than or equal to the blood vessel boundary number, this means that the extracted object pattern should be recognized as an appropriate blood vessel pattern.

In this case, the control section 30 proceeds to step SP15 and, if it is running in blood vessel registration mode, recognizes the characteristic points extracted as a group (segment blood vessel constituting-points row), which extends from the object pattern's starting point to the terminal point through the inflection point, as those to be registered; if it is running in authentication mode, the control section 30 recognizes them as those to be compared with the characteristic points already registered as the registrant identification data DIS. The control section 30 subsequently ends the distinguishing process.

In this manner, using the following tendencies as the distinguishing indicators for the blood vessel pattern and the pseudo blood vessel pattern, the control section 30 generates the blood vessel pattern range data (the center of the distribution of the distinguishing indicators, the inverse matrix of the covariance matrix, and the blood vessel boundary number): the tendency that the blood vessel pattern does not spread but has certain directivity (along the length of the finger), and the tendency that of all the segments of the blood vessel pattern, the one resembling a straight line is longer than the others. Based.. on the blood vessel pattern range data, the control section 30 eliminates the pseudo blood vessel patterns and the like.

(4) Operation and Effect

With the configuration described above, for each of the blood vessel patterns obtained from the image signals S1 input as a plurality of samples (a living body's finger), the data generation processing device 1 of the authentication system calculates a form value representing the shape of the pattern.

According to the present embodiment, using the following tendencies as the indicators, the form value is determined to represent the shape of the pattern: the tendency that the blood vessel pattern does not spread but has certain directivity (along the length of the finger), and the tendency that the segment resembling a straight line is longer than the others.

That is, the data generation processing device 1 calculates the following values as the shape values (Fig. 22: step SP1 to step SP5): firstly, the degree of the spread of the weighted distribution (Fig. 17) with the length of the segment used as frequency, as for the distribution of the angles (Fig. 16) of the reference axis (perpendicular to the direction of the circulation of blood) with respect to the segments connecting the characteristic points of the blood vessel pattern; secondly, the ratio of the size of the distribution existing within the predetermined angular range whose center is equal to the angle of the direction of the blood circulation (90 degrees) to the size of the total distribution; thirdly, the number of the segments (Fig. 19(A)).

Then, the data generation.processing device 1 calculates the center of the three-dimensional distribution (Fig. 20) of those form values, and the inverse number of the valued (the covariance matrix) representing the degree of the spread from the center, and stores them in the internal memory of the authentication device 2. On the other hand, the authentication device 2 of the authentication system calculates the above-noted three form values for the pattern obtained from the image signals S20a or S20b that were input as those to be either registered or compared with the registered data. Then, using the inverse number of the covariance matrix, the authentication device 2 calculates the Mahalanobis distance between the position identified by the three form values in the three-dimensional distribution and the center of the three-dimensional distribution (Fig. 20) stored in the internal memory. If the Mahalanobis distance is greater than the predetermined threshold (the blood vessel boundary number (Fig. 20: "$Rf_f$"), the authentication device 2 disposes of the pattern (Fig. 24).

Accordingly, as for the blood vessel patterns obtained from the plurality of samples, the authentication system recognizes where the pattern obtained from those to be either registered or compared with the registered data exists in the three-dimensional distribution (Fig. 20) corresponding to the three indicators representing the characteristics of the blood vessel patterns, and whether it exists within the range extending from the center of the distribution to the boundary (the blood vessel boundary number (Fig. 20: "$Rf_f$"): existing inside the range means that it is a living bady's patter.

Accordingly, even if the pattern obtained from the image signals S20a or S20b that were input as those to be either registered or compared with the registered data is the pseudo blood vessel pattern (Figs. 19(B) and (C)), compared with the blood vessel pattern, the authentication system assumes that the pseudo blood vessel pattern is not the blood vessel pattern. This increases the possibility that the authentication system eliminates the pseudo blood vessel pattern before registering or comparing them.

Moreover, the data generation device 1 and the authentication device 2 calculate the form values after extracting the characteristic points of the blood vessel pattern so that the line passing through these characteristic points resembles both the blood vessel pattern and the straight line.

Accordingly, after emphasizing the characteristic of the blood vessel pattern, which has the tendency that the segment resembling the straight line is long, the authentication system calculates the form values representing the shape of the pattern. This allows the authentication system to precisely calculate the form values. This increases the possibility that the authentication system eliminates the pseudo blood vessel pattern after assuming that it is not the blood vessel pattern.

According to the above configuration, as for the blood vessel patterns obtained from the plurality of samples, the authentication system recognizes where the pattern obtained from those to be either registered or compared with the registered data exists in the three-dimensional distribution corresponding to the three indicators representing the characteristics of the blood vessel patterns, and whether it exists within the range extending from the center of the distribution to the boundary: existing inside the range means that it is a living body's pattern. This increases the possibility that the Authentication system eliminates the pseudo blood vessel pattern after assuming that it is not the blood vessel pattern. Thus, the authentication system that is able to improve the accuracy of authentication can be realized.

(5) Other embodiment

In the above noted embodiment, the determination is made as to whether the input pattern is the blood vessel pattern or not based on the data representing the distribution of the blood vessel pattern obtained from the plurality of samples and the data (threshold) representing the boundary of the distribution, which is used for the determination of the blood vessel pattern. However, the present invention is not limited to this. The distribution of the pseudo blood vessel pattern may also be used when the determination is made as to whether the input pattern is the blood vessel pattern or not.

That is, the above-noted data generation process (Fig. 22) of the data generation device 1 stores the center of the distribution of the three distinguishing indicators of each blood vessel pattern obtained from the living body's samples; the inverse matrix of the covariance matrix, and the blood vessel boundary number ("Rf$_F$," or "2.1" of the Mahalanobis distance, in the case of Fig. 20) in ROM of the authentication device 2 as the blood vessel pattern range data. At the same time, as for each pseudo blood vessel pattern obtained from non-living body's samples, the above-noted data generation process (Fig. 22) stores the center of the distribution of the three distinguishing indicators of the pseudo blood vessel pattern, the inverse matrix of the covariance matrix, and a pseudo blood vessel boundary number ("Rf$_G$, or "2.5" of the Mahalanobis distance, in the case of Fig. 20) in ROM of the authentication device 2 as pseudo blood vessel pattern range data.

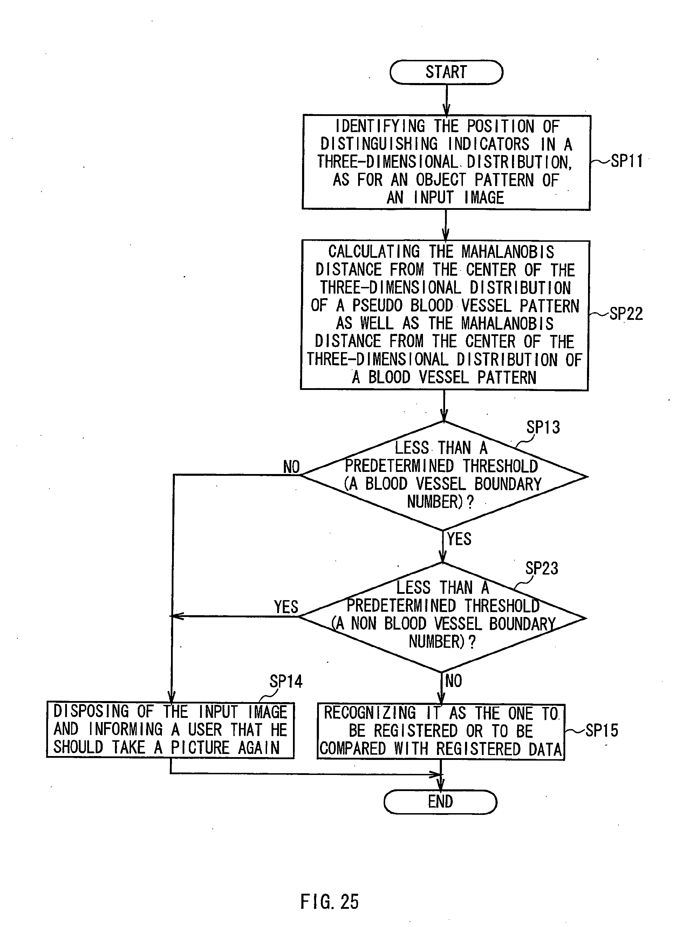

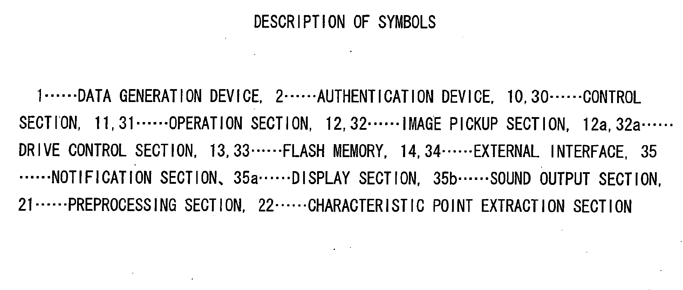

On the other hand, as shown in Fig. 25 whose parts have been designated by the same symbols as the corresponding parts of Fig. 24, based on the blood vessel pattern range data, the authentication device 2 calculates the Mahalanobis distance (referred to as living body distribution-related distance, hereinafter) between the position of the input pattern (the object pattern whose object is the current target of image capturing) in the three distinguishing indicators' distribution and the center of the distribution; at the same time, based on the pseudo blood vessel pattern range data, the authentication device 2 calculates the Mahalanobis distance (referred to as non-living body distribution-related distance, hereinafter) between the position of the input pattern in the three distinguishing indicators' distribution and the center of the distribution (step SP22).

If the living body distribution-related distance is less than or equal to the blood vessel boundary number, the authentication device 2 makes a determination as to whether the non-living body distribution-related distance is less than or equal to the pseudo blood vessel boundary number (step SP23). If the non-living body distribution-related distance is less than or equal to the pseudo blood vessel boundary number, this means that, as indicated by the δ-P plane of the three-dimensional distribution of Fig. 20, for example, the input pattern exists in an area where the range, in which things should be determined as the blood vessel patterns, is overlapped with the range, in which things' should be determined as the pseudo blood vessel patterns.

In this case, the authentication device 2 therefore disposes of the input pattern (the object pattern whose object is the current target of image capturing) and the like even when the living body distribution-related distance is less than or equal to the blood vessel boundary number (step SP14).

Whereas, if the living body distribution-related distance is less than or equal to the blood vessel boundary number and the non-living body distribution-related distance is greater than the pseudo blood vessel boundary number, the authentication device 2 recognizes the characteristic points extracted as a group (segment blood vessel constituting-points row) extending from the object pattern's starting point to the terminal point via the inflection point as those to be either registered or compared (step SP15).

In this manner, the distribution of the pseudo blood vessel pattern can be also used when the determination is made as to whether the input pattern is the blood vessel pattern. This increases the possibility that the authentication system eliminates the pseudo blood vessel pattern after assuming that it is not the blood vessel pattern, compared with the above-noted embodiment.

Incidentally, after it determines that the living body distribution-related distance is less than or equal to the blood vessel boundary number, the authentication device 2 then makes a determination as to whether the non-living body distribution-related distance is less than or equal to the pseudo blood vessel boundary number (step SP23). However, instead of this, the following is also possible: for example, in such a case, a determination is made as to whether the living body distribution-related distance calculated at step SP22 is greater than the non-living body distribution-related distance.

Moreover, in the above-noted embodiment, as the living bod's pattern, the form pattern (the blood vessel pattern) of the blood vessels is applied. However, the present invention is not limited to this. Other things, such as a form pattern of fingerprints, vocal prints, mouth prints, or nerves, can be applied if a corresponding acquisition means is used based on an applied living body's pattern.

By the way, the above-noted three distinguishing indicators can be used as the form values representing the shape of the pattern if the applied living body's pattern, like the blood vessel pattern or the nerve pattern, has the tendency that it does not spread but has certain directivity (along the length of the finger), or the tendency that the segment resembling a straight line is long. However, if the applied one is not a living body's pattern but has that characteristic, the form values may need to be changed according to the characteristics of the applied living body's pattern.

Incidentally, in the above-noted embodiment, if the applied living body's pattern has the above characteristics, the following values are used as the three distinguishing indicators: firstly, the degree of the spread of the weighted distribution with the length of the segment used as frequency, as for the distribution of the angles of the reference axis with respect to the segments connecting the characteristic points of the pattern; secondly, the ratio of the size of the distribution existing within the predetermined angular range whose center, is equal to the angle of the direction perpendicular to the reference axis to the size of the total angular range of the distribution; thirdly, the number of the segments.

However, the present invention is not limited to this. Only two of those distinguishing indicators may be used, or another, new distinguishing indicator, such as the one used for a determination as to whether the top three peaks, of all the peaks of the angle distribution, includes the 90-degree point, can be added to those three distinguishing indicators. In short, as long as there are two or more distinguishing indicators, they can be used as the values representing the shape of the pattern.

Furthermore, in the above-noted embodiment, the blood vessel pattern range data stored in ROM of the authentication device 2 contains the center of the distribution of the three distinguishing indicators of each blood vessel pattern obtained from the living body's samples, the inverse matrix of the covariance matrix and the blood vessel boundary number ("Rf$_F$," or "2.1" of the Mahalanobis distance, in the case of Fig. 20). However, the present invention is not limited to this. The blood vessel boundary number may be previously set in the authentication device 2; if only the inverse number of the covariance matrix is calculated during the calculation of the Mahalanobis distance (Fig. 24 (Fig. 25): step SP12), it may only contain the center of the distribution of the three distinguishing indicators and the covariance matrix.

Furthermore, in the above-noted embodiment, as extraction means that extracts the characteristic points from the living body's pattern so that the line connecting these characteristic points resembles the living body's pattern and the straight line, the preprocessing section 21 and the characteristic point extraction section 22 are applied. However, the present invention is not limited to this. The process of the preprocessing section 21 and the characteristic point extraction section 22 may be changed if necessary.

For example, the preprocessing section 21 performs the A/D conversion process, the outline extraction process, the smoothing process, the binarization process, and the thinning process in that order. Alternatively, some of the processes may be omitted or replaced, or another process may be added to the series of processes. Incidentally, the order of the processes can be changed if necessary.

Moreover, the process of the characteristic point extraction section 22 can be replaced by a point extraction process (called Harris corner) or a well-known point extraction process such as the one disclosed in Japanese Patent Publication No. 2006-207033 ([0036] to [0163]).

Furthermore, in the above-noted embodiment, the authentication device 2 including the image-capturing function, the verification function and the registration function is applied. However, the present invention is not limited to this. Various applications are possible according to purposes and the like: those functions may be implemented in different devices.

Industrial Applicability

The present invention can be applied to the field of biometrics authentication.

**Claims**

1. A pattern identification method comprising:

   a first step of calculating, for each of living body's patterns obtained from a plurality of living body's samples, two or more form values representing the shape of the pattern;
   a second step of calculating the center of the distribution of the two or more form values and a value representing the degree of the spread from its center;
   a third step of calculating a distance between the two or more form values of a pattern obtained from those to be registered or to be compared with registered data and the center of the distribution of the two or more form values using the value; and
   a fourth step of disposing of the pattern if the distance is greater than a predetermined threshold.

2. The pattern identification method according to claim 1, wherein
   the two or more form values include at least two of the following values:

   a degree of the spread of the weighted distribution with the length of a segment used as frequency, as for the distribution of the angles of a reference axis with respect to the segments connecting characteristic points of the pattern;
   a ratio of the size of the distribution existing within a predetermined angular range whose center is equal to the angle of a direction perpendicular to the reference axis to the size of the total angular range of the distribution;
   the number of the segments.

3. The pattern identification method according to claim 2, further comprising

an extraction step of extracting the characteristic points from the living body's pattern obtained from the plurality of living body's patterns so that a line connecting these characteristic points resembles the living body's pattern and a straight line.

4. The pattern identification method according to claim 1, wherein
the first step calculates, for each of the living body's patterns obtained from the plurality of 'living body's samples, the two or more form values representing the shape of the pattern, and also calculates, for each of non-living body's patterns obtained from a plurality of non-living body's samples, the two or more form values;
the second step calculates, as for each of the living body's patterns, the center of the distribution of the two or more form values and the value representing the degree of the spread from the center, and also calculates, as for each of the non-living body's patterns, the center of the distribution of the two or more form values and a value representing the degree of the spread from the center;
the third step calculates the first distance between the two or more form values of the pattern and the center of the distribution of the two or more form values of each of the living body's pattern, and also calculates a second distance between the two or more form values of the pattern and the center of the distribution of the two or more form values of each of the non-living body's pattern, using the value representing the degree of the spread from the center; and
the fourth step disposes of the pattern when the second distance is within a second threshold used for the determination of the non-living body's pattern, even if the first distance is greater than a first threshold used for the determination of the living body's pattern and the first distance is within the first threshold.

5. The pattern identification method according to claim 1, wherein the living body's pattern is a form pattern of blood vessels.

6. A registration device comprising:

storage means for storing, for each of living body's patterns obtained from a plurality of living body's samples, the center of the distribution of two or more form values representing the shape of the pattern and a value representing the degree of the spread from the center;
calculation means for calculating a distance between the two or more form values of a pattern obtained from those to be registered and the center of the distribution of the two or more form values stored in the storage means using the value; and
registration means for disposing of the pattern if the distance is greater than a predetermined threshold while registering the pattern in a storage medium if the distance is within the threshold.

7. The registration device according to claim 6, wherein
the two or more form values include at least two of the following values:

a degree of the spread of the weighted distribution with the length of a segment used as frequency, as for the distribution of the angles of a reference axis with respect to the segments connecting characteristic points of the pattern;
a ratio of the size of the distribution existing within a predetermined angular range whose center is equal to the angle of a direction perpendicular to the reference axis to the size of the total angular range of the distribution;
the number of the segments.

8. The registration device according to claim 6, further comprising
extraction means for extracting the characteristic points from the pattern, so that a line connecting these characteristics points resembles the pattern and a straight line, wherein
the registration means registers the pattern's characteristic points extracted by the extraction means in the storage medium.

9. The registration device according to claim 6, wherein
the storage means stores, for each of the living body's patterns obtained from the plurality of living body's samples, the center of the distribution of the two or more form values representing the shape of the pattern and the value representing the degree of the spread from the center, and also stores, for each of non-living body's patterns obtained from a plurality of non-living body's samples, the center of the distribution of the two or more form values and a value representing the degree of the spread from the center;
the calculation means calculates the first distance between the two or more form values of the pattern and the center of the distribution of the two or more form values of each of the living body's pattern, and also calculates a second distance between the two or more form values of the pattern and the center of the distribution of the two or more form values of each of the non-living body's pattern, using the value representing the degree of the spread from the center; and

the registration means disposes of the pattern when the second distance is within a second threshold used for the determination of the non-living body's pattern, even if the first distance is greater than a first threshold used for the determination of the living body's pattern and the first distance is within the first threshold.

10. The registration device according to claim 6, wherein
the living body's pattern is a form pattern of blood vessels.

11. A verification device comprising:

storage means for storing, for each of living body's patterns obtained from a plurality of living body's samples, the center of the distribution of two or more form values representing the shape of the pattern and a value representing the degree of the spread from the center;

calculation means for calculating a distance between the two or more form values of a pattern obtained from those to be registered and the center of the distribution of the two or more form values stored in the storage means using the value; and

verification means for disposing of the pattern if the distance is greater than a predetermined threshold while comparing the pattern with registered data registered in a storage medium if the distance is within the threshold.

12. The verification device according to claim 11, wherein
the two or more form values include at least two of the following values:

a degree of the spread of the weighted distribution with the length of a segment used as frequency, as for the distribution of the angles of a reference axis with respect to the segments connecting characteristic points of the pattern;

a ratio of the size of the distribution exiting within a predetermined angular range whose center is equal to the angle of a direction perpendicular to the reference axis to the size of the total angular range of the distribution;

the number of the segments.

13. The -registration device according to claim 11, further comprising
extraction means for extracting the characteristic points from the pattern so that a line connecting these characteristic points resembles the pattern and a straight line, wherein
the verification means compares the pattern's
characteristic points extracted by the extraction means with the registered data.

14. The verification device according to claim 11, wherein
the storage means stores, for each of the living body's patterns obtained from the plurality of living body's samples, the center of the distribution of the two or more form values representing the shape of the pattern and the value representing the degree of the spread from the center, and also stores, for each of non-living body's patterns obtained from a plurality of non-living body's samples, the center of the distribution of the two or more form values and a value representing the degree of the spread from the center;

the calculation means calculates the first distance between the two or more form values of the pattern and the center of the distribution of the two or more form values of each of the living body's pattern, and also calculates a second distance between the two or more form values of the pattern and the center of the distribution of the two or more form values of each of the non-living body's pattern, using the value representing the degree of the spread from the center; and

the verification means disposes of the pattern when the second distance is within a second threshold used for the determination of the non-living body's pattern, even if the first distance is greater than a first threshold used for the determination of the living body's pattern and the first distance is within the first threshold.

15. The verification device according to claim 11, wherein
the living body's pattern is a form pattern of blood vessels.

16. A program causing a computer that stores, for each of living body's patterns obtained from a plurality of living body's samples, the center of the distribution of two or more form values representing the shape of the pattern and a value representing the degree of the spread from the center, to execute:

a first process of calculating a distance' between the two or more form values of a pattern obtained from those to be registered and the center of the distribution of the two or more form values stored in the storage means using the value; and

: a second process of disposing of the pattern if the distance is greater than a predetermined threshold while registering the pattern in a storage medium if the distance is within the threshold.

17. A program causing a computer that stores, for each of living body's patterns obtained from a plurality of living body's samples, the center of the distribution of two or more form values representing the shape of the pattern and a value representing the degree of the spread from the center, to execute:

a first process of calculating a distance between the two or more form values of a pattern obtained from those to be registered and the center of the distribution of the two or more form values stored in the storage means using the value; and

a second process of disposing of the pattern if the distance is greater than a predetermined threshold while comparing the pattern with registered data registered in a storage medium if the distance is within the threshold.

FIG. 1

EP 2 075 760 A1

S2 → **PREPROCESSING SECTION** (21) → D21 → **CHARACTERISTIC POINT EXTRACTION POINT** (22) → D1 → (FLASH MEMORY 13)

FIG. 2

(A)　　　　　　　　　　(B)

FIG. 3

IN A CASE OF AN END POINT        IN A CASE OF A DIVERGING POINT        IN A CASE OF A ISOLATED POINT

FIG. 4

EP 2 075 760 A1

FIG. 5

FIG. 6

(A) IN A CASE OF A POINT ON A LINE

(B) IN A CASE OF AN INFLECTION POINT

FIG. 7

FIG. 8

FIG. 9

START

SELECTING A REFERENCE POINT AND A REMOVAL CANDIDATE POINT — SP31

WHETHER
THIS IS THE FIRST TIME
FOR THE CALCULATION OF AN OVERLAP RATIO, SP32
OR WHETHER THE LENGTH OF A SEGMENT WHOSE OVERLAP RATIO
HAS BEEN CALCULATED IMMEDIATELY BEFORE
THIS IS LESS THAN A
SEGMENT LENGTH
THRESHOLD?

NO

YES SP33

SETTING A FIRST OVERLAP RATIO THRESHOLD

SP36

SETTING A SECOND OVERLAP RATIO THRESHOLD

CALCULATING AN OVERLAP RATIO — SP34

SP35
THE OVERLAP
RATIO IS GREATER THAN OR
EQUAL TO THE OVERLAP RATIO
THRESHOLD?

YES                                      NO

SP39
REMOVING A CHARACTERISTIC POINT
BETWEEN A CHARACTERISTIC POINT,
WHICH WAS SELECTED AS A REMOVAL
CANDIDATE POINT IMMEDIATELY
BEFORE THE CURRENT ONE,
AND THE REFERENCE POINT

SP37
THE CURRENTLY
SELECTED REMOVAL CANDIDATE
POINT IS THE LAST?

YES

NO        SP38

RECOGNIZING THE NEXT ONE,
WHICH IS CLOSER TO A
TERMINAL POINT, AS A
REMOVAL CANDIDATE POINT

SP40
THE CURRENTLY
SELECTED REMOVAL CANDIDATE
POINT IS THE LAST?

YES

NO        SP41

REGARDING THE CURRENTLY SELECTED
REMOVAL CANDIDATE POINT AS THE
REFERENCE POINT AND RECOGNIZING
THE NEXT CHARACTERISTIC POINT,
WHICH IS CLOSER TO A TERMINAL
POINT THAN THE REFERENCE POINT
IS, AS A REMOVAL CANDIDATE POINT

SP42
REMOVING A CHARACTERISTIC POINT
BETWEEN THE CURRENTLY SELECTED
REMOVAL CANDIDATE POINT AND
THE REFERENCE POINT

END

FIG. 10

30

FIG. 11

(A) BEFORE CONNECTION

(B) AFTER CONNECTION

FIG. 12

EP 2 075 760 A1

FIG. 13

FIG. 14

(A) BLOOD VESSEL PATTERN     (B) PSEUDO BLOOD VESSEL PATTERN (GUMMI CANDY)     (C) PSEUDO BLOOD VESSEL PATTERN (RADISH)

FIG. 15

FIG. 16

FIG. 17

(A) IN A CASE OF A GUMMI CANDY

(B) IN A CASE OF A RADISH

FIG. 18

(A) IN A CASE OF A
     LIVING BODY'S FINGER

(B) IN A CASE OF A
     GUMMI CANDY

(C) IN A CASE OF A RADISH

FIG. 19

FIG. 20

FIG. 21

```
                    ┌──────────────┐
                    │    START     │
                    └──────────────┘
                           │
   ┌──────────────────────▼───────────────────────────────┐
   │     SELECTING A PROCESSING-TARGET SAMPLE              │──SP1
   └──────────────────────────────────────────────────────┘
                           │
   ┌──────────────────────▼───────────────────────────────┐
   │  CALCULATING THE VARIANCE OF AN ANGLE DISTRIBUTION    │──SP2
   └──────────────────────────────────────────────────────┘
                           │
   ┌──────────────────────▼───────────────────────────────┐
   │ CALCULATING THE INTENSITY OF THE DISTRIBUTION OF A    │──SP3
   │ PREDETERMINED ANGULAR RANGE WHOSE CENTER IS 90 DEGREES│
   └──────────────────────────────────────────────────────┘
                           │
   ┌──────────────────────▼───────────────────────────────┐
   │ CALCULATING THE NUMBER OF SEGMENTS RECOGNIZED AS GROUPS│──SP4
   └──────────────────────────────────────────────────────┘
                           │
                          SP5
                       ◇─────────◇
            NO        ╱ CALCULATION ╲
   ◄───────────────── HAS BEEN COMPLETED FOR
                      ╲ ALL THE SAMPLES? ╱
                       ◇─────────◇
                           │ YES
   ┌──────────────────────▼───────────────────────────────┐
   │       SUBSTITUTING A MATRIX FOR EACH SAMPLE'S         │──SP6
   │            DISTINGUISHING INDICATORS                  │
   └──────────────────────────────────────────────────────┘
                           │
   ┌──────────────────────▼───────────────────────────────┐
   │   CALCULATING THE CENTER OF THE DISTRIBUTION OF       │──SP7
   │   THE DISTINGUISHING INDICATORS OF EACH SAMPLE        │
   └──────────────────────────────────────────────────────┘
                           │
   ┌──────────────────────▼───────────────────────────────┐
   │ CALCULATING THE INVERSE MATRIX OF A COVARIANCE MATRIX │──SP8
   └──────────────────────────────────────────────────────┘
                           │
   ┌──────────────────────▼───────────────────────────────┐
   │      GENERATING BLOOD VESSEL PATTERN RANGE DATA       │──SP9
   └──────────────────────────────────────────────────────┘
                           │
   ┌──────────────────────▼───────────────────────────────┐
   │      STORING THEM IN AN INTERNAL MEMORY OF            │──SP10
   │           AN AUTHENTICATION DEVICE                    │
   └──────────────────────────────────────────────────────┘
                           │
                    ┌──────▼───────┐
                    │     END      │
                    └──────────────┘
```

FIG. 22

FIG. 23

START

IDENTIFYING THE POSITION OF
DISTINGUISHING INDICATORS IN A
THREE-DIMENSIONAL DISTRIBUTION, ⎬~SP11
AS FOR AN OBJECT PATTERN OF AN
INPUT IMAGE

CALCULATING THE MAHALANOBIS
DISTANCEFROM THE CENTER OF THE ⎬~SP12
THREE-DIMENSIONAL DISTRIBUTION

SP13

NO ◇ LESS THAN
A PREDETERMINED
THRESHOLD?

YES

SP14

DISPOSING OF THE INPUT IMAGE
AND INFORMING A USER THAT HE
SHOULD TAKE A PICTURE AGAIN

RECOGNIZING IT AS THE ONE TO
BE REGISTERED OR TO BE ⎬~SP15
COMPARED WITH REGISTERED DATA

END

FIG. 24

```
                        ( START )
                            │
                            ▼
        ┌───────────────────────────────────┐
        │  IDENTIFYING THE POSITION OF      │
        │  DISTINGUISHING INDICATORS IN A   │
        │  THREE-DIMENSIONAL DISTRIBUTION,  ├── SP11
        │  AS FOR AN OBJECT PATTERN OF      │
        │         AN INPUT IMAGE            │
        └───────────────────────────────────┘
                            │
                            ▼
        ┌───────────────────────────────────┐
        │  CALCULATING THE MAHALANOBIS      │
        │  DISTANCE FROM THE CENTER OF THE  │
        │  THREE-DIMENSIONAL DISTRIBUTION   │
        │  OF A PSEUDO BLOOD VESSEL PATTERN ├── SP22
        │  AS WELL AS THE MAHALANOBIS       │
        │  DISTANCE FROM THE CENTER OF THE  │
        │  THREE-DIMENSIONAL DISTRIBUTION OF│
        │       A BLOOD VESSEL PATTERN      │
        └───────────────────────────────────┘
                            │
                            ▼
                                        SP13
                      ◇ LESS THAN A
        NO         ◇ PREDETERMINED THRESHOLD ◇
    ◄───────────── ◇ (A BLOOD VESSEL BOUNDARY ◇
                      ◇   NUMBER) ?
                            │
                           YES
                            │
                            ▼
                                        SP23
                      ◇ LESS THAN A
       YES         ◇ PREDETERMINED THRESHOLD ◇
    ◄───────────── ◇ (A NON BLOOD VESSEL BOUNDARY ◇
                      ◇   NUMBER) ?
                            │
                           NO
                            │
        SP14                │        SP15
        ▼                   ▼
┌───────────────────────┐ ┌───────────────────────┐
│ DISPOSING OF THE INPUT│ │ RECOGNIZING IT AS THE │
│ IMAGE AND INFORMING A │ │ ONE TO BE REGISTERED  │
│ USER THAT HE SHOULD   │ │ OR TO BE COMPARED WITH│
│ TAKE A PICTURE AGAIN  │ │   REGISTERED DATA     │
└───────────────────────┘ └───────────────────────┘
        │                   │
        └──────────┬────────┘
                   ▼
                ( END )
```

FIG. 25

DESCRIPTION OF SYMBOLS

1······DATA GENERATION DEVICE, 2······AUTHENTICATION DEVICE, 10,30······CONTROL SECTION, 11,31······OPERATION SECTION, 12,32······IMAGE PICKUP SECTION, 12a,32a······ DRIVE CONTROL SECTION, 13,33······FLASH MEMORY, 14,34······EXTERNAL INTERFACE, 35 ······NOTIFICATION SECTION、35a······DISPLAY SECTION, 35b······SOUND OUTPUT SECTION, 21······PREPROCESSING SECTION, 22······CHARACTERISTIC POINT EXTRACTION SECTION

## INTERNATIONAL SEARCH REPORT

| International application No. |
| --- |
| PCT/JP2007/070511 |

**A. CLASSIFICATION OF SUBJECT MATTER**
G06T7/00(2006.01)i

According to International Patent Classification (IPC) or to both national classification and IPC

**B. FIELDS SEARCHED**

Minimum documentation searched (classification system followed by classification symbols)
G06T7/00

Documentation searched other than minimum documentation to the extent that such documents are included in the fields searched
Jitsuyo Shinan Koho          1922-1996   Jitsuyo Shinan Toroku Koho   1996-2007
Kokai Jitsuyo Shinan Koho    1971-2007   Toroku Jitsuyo Shinan Koho   1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y<br>A | JP 2002-279426 A  (Kabushiki Kaisha Ai Di Tekunika),<br>27 September, 2002 (27.09.02),<br>Par. No. [0007]<br>(Family: none) | 1,3-6,8-11,<br>13-17<br>2,7,12 |
| Y<br>A | JP 2004-171577 A  (Hitachi, Ltd.),<br>17 June, 2004 (17.06.04),<br>Par. Nos. [0022] to [0023], [0026]<br>(Family: none) | 1,3-6,8-11,<br>13-17<br>2,7,12 |
| Y<br>A | JP 2003-85539 A  (Bionics Co., Ltd.),<br>20 March, 2003 (20.03.03),<br>Par. Nos. [0015] to [0023], [0031]<br>& WO 2002/069260 A1     & US 2004/71322 A1<br>& EP 1376465 A1 | 6,8-10,16<br>1-5,7,11-15,<br>17 |

| ☒ Further documents are listed in the continuation of Box C. | ☐ See patent family annex. |
| --- | --- |

| * | Special categories of cited documents: | | "T" | later document published after the international filing date or priority date and not in conflict with the application but cited to understand the principle or theory underlying the invention |
| --- | --- | --- | --- | --- |
| "A" | document defining the general state of the art which is not considered to be of particular relevance | | | |
| "E" | earlier application or patent but published on or after the international filing date | | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | | |
| "P" | document published prior to the international filing date but later than the priority date claimed | | "&" | document member of the same patent family |

| Date of the actual completion of the international search<br>09 November, 2007 (09.11.07) | Date of mailing of the international search report<br>20 November, 2007 (20.11.07) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/070511

C (Continuation).  DOCUMENTS CONSIDERED TO BE RELEVANT

| Category* | Citation of document, with indication, where appropriate, of the relevant passages | Relevant to claim No. |
|---|---|---|
| A | JP 2005-215883 A  (Sony Corp.), 11 August, 2005 (11.08.05), Full text; all drawings & US 2005/180636 A1 | 1-17 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002259345 A

- JP 2006207033 A

**Non-patent literature cited in the description**

- **Tsutomu Matsumoto.** Biometrics Authentication for Financial Transaction. *the 9th study group of the Financial Services Agency for the issues on forged cash cards,* 15 April 2005, URL: http://www.fsa.go.jp/singi/singi_fccsg/gaiyou/f-20050415-singi_fccsg/02.pdf